# EUROPEAN PATENT APPLICATION

(11) **EP 1 280 082 A1**
(43) Date of publication of application: **29.01.2003**
(21) Application number: 01917512.4
(22) Date of filing: 28.03.2001
(51) Int. Cl.: G06F 17/60, H04B 10/10

(54) **APPARATUS FOR TOTALING/ANALYZING REPLIES USING INFRARED OPTICAL COMMUNICATION, AND SIGNAL AMPLIFIER SUITABLE FOR THAT APPARATUS**

(30) Priority: 28.03.2000 JP 2000088623
(71) Applicant: Kabushiki Kaisha Media Technical, Tokyo 135-0015 (JP)
(72) Inventor: INOUE, Katsuhiko, Hino-shi, Tokyo 191-0012 (JP); KANDA, Mikio, Saitama-shi, Saitama 330-0824 (JP)
(74) Representative: Granleese, Rhian Jane
(86) International application number: JP0102528
(87) International publication number: WO01073630

(57) **Abstract**

This invention is concerned with an apparatus for totaling and analyzing replies for totaling and analyzing replies to presented questions at meetings and conferences. The purpose is make setting and removing easier expand its use by changing known apparatus for totaling and analyzing replies to wireless diminishing wired connection between replying unit and center apparatus. In this invention, each of replying units has its identification code, and a space transmitting infrared light is used for communications between replying units and a center apparatus. Replying signals from the replying units are sent at each replying period designated to each replying unit by the identification code obeying a command signal from the center apparatus. The center apparatus recognizes the code of the replying unit, which sent signals for received replying signals from the timing of the signal and uses for totaling and analyzing. For amplification of received signals a novel amplifying function of a feedback resistors connecting between the input and the output terminal of an electronic device in which an input voltage exceeds a fixed value a transition of the output voltage occurs. The apparatus for totaling and analyzing replies in this invention can have applications at large meetings with many attendants, in addition to the applications at meetings where wire connected known apparatus have been used more conventionally.

## Description

### Technical Field

The present invention relates to an apparatus for totaling/analyzing replies using infrared optical communication, and signal amplifier suitable for that apparatus. In more detail, it relates to an apparatus for totaling and analyzing replies using infrared optical communication which receives, totals and analyzes a plurality of replies from a plurality of repliers in response to presented questions, and a signal amplifier suitable to the apparatus. Especially, this invention relates to apparatus for totaling and analyzing replies, which is widely used for totaling and analyzing replies to questions from questioned participants at various conferences, seminars, or meetings with many attendants, and to a signal amplifier suitable to the apparatus.

### Background art

An apparatus for totaling and analyzing replies which totals and analyzes the replies to questions from attendants, and furthermore the results can soon be shown to the attendants is very useful at conferences or meetings with many attendants. The application of the apparatus for totaling and analyzing replies is extensive. As examples of the application, we can show discussion meetings with voting at international conferences on medical affair about drugs and treatment at various clinical examples, and meetings about researching consumer's trend at about tastes of food, hobby, trip, and so on.

Many systems with functions of totaling, analyzing replies to questions have been proposed. An electronic conference system is one of these systems that can totals, analyzes replies to questions. The electronic conference system can hold a conference even if participants are not in a conference room. Since computers are used as terminals of the system, the electronic conference system have characteristics to carry many functions. The electronic conference system, however, has a problem of large labor and cost for setting and removing computer systems at a place where a conference is held. The electronic conference system is not adequate for the limited application of the replying totaling and analyzing system, since it does not require such many functions which computer terminals carry.

A questionnaire system collecting, totaling, and analyzing replies to questions for questionnaire researches is described in Japanese Patent Laid-Open Application 08-272773. The questionnaire system, however, suffer a problem of large labor and cost for setting and removing the questionnaire network when the system is used at usual conference rooms and halls which do not have available network because the system uses existing networks.

A replying totaling and analyzing apparatus totaling, analyzing the replies to questions of the attendants, and showing the results to the attendants is described in Japanese Laid-Open Patent Application 10-32064. In this apparatus, communications between center apparatus and replying units are made through cables.

Using this replying totaling and analyzing apparatus, replies from attendants can quickly be totaled and analyzed. Since the totaling and analyzing results can be shown to the attendants by using a display device and so on in this apparatus, the attendants can reply to a next question knowing the previous results.

This replying totaling and analyzing apparatus must be set and connected between the center apparatus and the replying units before the use and must be removed after the use of the apparatus, since communications between the center apparatus and the replying units are made using wired communications. Therefore, many people and time are required for setting and removal of the system when the conference is large with many participants. So much labors and cost are needed for setting and removing of the apparatus.

Setting and removing of a replying totaling and analyzing apparatus can be made easier by using wireless communication between center apparatus and replying units. Sending and receiving radio frequency electromagnetic wave is commonly used for means for wireless communication. The apparatus with radio frequency electromagnetic wave communication, however, must avoid interference with the existing communication systems, because radio frequency electromagnetic waves are widely used for many existing communication systems. Furthermore, effects of the electromagnetic wave on electronic instruments around the system and on pace makers of human hearts are worried. So the use is legally limited. Therefore, there is a problems of these many limitations for communications using radio frequency electromagnetic waves. The replying totaling and analyzing system prepared enough for the limitations has the problem of legal control of usage, in addition to the problems of sophisticated construction, large cost and furthermore, limitation for total amount of available replying units.

There are another wireless communication methods using space propagation of infrared lights. There are not so many limitations for the wireless communication using space propagation of infrared lights compared with the communication using radio frequency electromagnetic waves. The communications using space transmission of infrared lights are found for indoor LAN wireless connections and short distance wireless control systems so on. The communications do not have so many applications because the ranges and the distances of the communications are less compared with communications using radio frequency electromagnetic waves.

In the Japanese Laid-Open Patent Application 07-15399, an application of an infrared light communication to conferences is described. In the Japanese Laid-Open Patent Application 10-28264, an application of an infrared light communication catching behaviors of attendants at exhibitions is described. These infrared applications are for unidirectional communication from a center to terminals and not for mutual communication between center and terminals used for replying totaling and analyzing systems. So, the system cannot have functions required for replying totaling and analyzing systems of receiving signals in which replies from a plurality of replying units are received distinguishing each replying unit that sent the replying signal at the center.

### Disclosure of the Invention

The purpose of this invention is to present a replying totaling and analyzing apparatus for receiving replying to questions from many respondents attending a conference or some other meeting, which enables infrared light space transmitting communications between each of plurality of replying units, wireless communications between the replying units and the center apparatus, facilitation of setting and removing of e the apparatus and of increasing number of replying units.

To attain this purpose, the replying totaling and analyzing apparatus of this invention is characterized by comprising the center apparatus and a plurality of replying units mentioned below.

The center apparatus of this invention comprises a primary controlling apparatus possessing input means for data and instructions input outputting a command for emitting command signals to a plurality of replying units and total and analyze the replies from the plurality of replying units, and the center relaying and light signal emitting-receiving apparatus emitting command signals to a plurality of replying units according to the command issued by the primary controlling apparatus receiving light signals from the plurality of replying units responded to the command signals, detects replying signals from the light signals identifying respective replying units according to the identifying codes and inputs the replying signals to the primary controlling apparatus. The plurality of replying units, on the other hand, comprises a reply inputting portion inputting a reply, a light receiving portion receiving light signals, a control portion outputting a replying signal pulses corresponding to the reply inputted from the inputting portion at a period pointed to the replying unit according to the identification code, and light signal emitting portion emitting a light signal according to the form indicated by the command signals. The apparatus for totaling and analyzing replies is made up by the construction described above.

In this invention, the center relaying and light signal emitting-receiving apparatus can comprise a center light signal emitting apparatus and a relaying apparatus, where the center light signal emitting apparatus transforms the command signals requesting replying signals into infrared light signals, emits the light signals, and receives infrared lights from a plurality of replying sets, and the relaying apparatus relays between the primary controlling apparatus and the center light signal emitting apparatus carrying signal processing.

Each replying unit carries its own identification codes and the communication between the center apparatus and each replying unit is performed through the identification codes. Although the infrared lights are used the communication between the center apparatus and each replying unit can be made separately even when the number of the replying unit is increased. The center apparatus can obtain replying and the replying units that sent the replying by the identification codes and can analyze the result of the replying from various points of view.

Since the communication between the center apparatus and the replying units is performed by using infrared lights, electrical lines between the center apparatus and replying units are not necessary. Then, the time and labor for setting and removing the apparatus can be saved. Furthermore, the apparatus can meet with an increase of attendants and the replying sets without any difficulty. For this reason, the apparatus for totaling and analyzing replies of this invention can be used not only at meetings where wired replying totaling and analyzing systems have been used, but also at larger meetings with more attendants.

The signal amplifier of this invention comprises amplification circuit which possesses an electronic device in which an output voltage level shows a transition when the input voltage increases above a fixed voltage and a feedback resistor connected between input and output terminals of the electronic device. The input bias voltage of the electronic device is set at the transition voltage. The amplifier is suitable for the amplification of the signal transmitted by infrared lights and other many applications since the amplifier limits excessively large input signals and shows large amplification rate for small signals.

### Brief Description of the Drawings

FIG. 1 shows a block diagram showing an embodiment of the apparatus for totaling and analyzing replies of this invention.
FIG. 2 shows a block diagram showing an embodiment of the apparatus for the totaling and analyzing replies of this invention in which a center relaying and light emitting-receiving apparatus is separated to a center light emitting-receiving apparatus and a center relaying apparatus.
FIG. 3 shows a block diagram showing an embodiment of the apparatus for the totaling and analyzing replies of this invention in which to a center relaying apparatus a plurality of center light emitting-receiving apparatus are set.
FIG. 4 shows an embodiment of the apparatus for totaling and analyzing replies of this invention in which a center apparatus comprises a display device for displaying questions and results of totaling and analyzing replies to repliers.
FIG. 5 is an embodiment showing a construction of command signals directing replies from the center apparatus to a plurality of replying units at the apparatus for the totaling and analyzing replies of this invention.
FIG. 6 is an embodiment of content pulses showing command signals directing replies from the center apparatus in the totaling and analyzing replies of this invention.
FIG. 7 is an embodiment showing replying signals of the replying units at the apparatus for totaling and analyzing replies of this invention replying to command signals directing replies from the center apparatus.
FIG. 8 is an embodiment showing replying signal windows at the later half of the replying section to which the replying units output replying signals of the apparatus for totaling and analyzing replies of this invention.
FIG. 9A is amplification circuit showing an analogue amplifier employing a digital element available for replying units and for a center apparatus of the apparatus for totaling and analyzing replies of this invention, and FIG. 9B is a figure showing a relation between input voltage and output voltage of the analogue amplifier employing the digital element.
FIG. 10 shows an example of an amplifier connecting the analogue amplification circuit of FIG. 9A in plural constructed by connecting the analogue amplification circuit in cascade to multi-steps.
FIG. 11A shows a multi-step amplifier which amplifies signals one-directionally by setting input bias voltage of each step alternately to bias voltage positioned around the starting voltage and to bias voltage positioned around the finishing voltage, and FIG. 11B schematically shows a relation between the input voltage and output voltage at these bias voltages.
FIG. 12 is an example giving one-directional characteristics of the multi-step amplifier in FIG. 10 by connecting a diode at the input.
FIG. 13 is an example of giving one-directional characteristics of the amplifier shown in FIG. 12 by connecting each input and output by a diode for the first stage and the second stage, and the diode at the first stage and the diode at the second stage are opposing each other.
FIG. 14 shows an example of an amplifier circuit connecting a plurality of amplification circuits shown in FIG. 9A in parallel.
FIG. 15 shows schematically a front view of a light receiving element of a center light emitting-receiving apparatus constructed combining a plurality light receiving element having various directivity in an embodiment of this invention.
FIG. 16 schematically shows a light emitting portion of a replying unit constructed by a plurality of angular distributed light emitting element and a light distribution correcting plate in an embodiment of this invention.
FIG. 17A schematically shows the light emitting portion of a center light emitting-receiving apparatus in an embodiment of this invention, and FIG. 17B schematically shows light emitting portion of a center light emitting-receiving apparatus in another embodiment of this invention.
FIG. 18A shows schematically a floor plan of a center relaying and light emitting-receiving apparatus and replying units communicating through a reflecting body of infrared light in an embodiment of this invention, and FIG. 18B shows schematically the side view.
FIG. 19 shows an example of a block diagram of supervising system of a apparatus for totaling and analyzing replies combining a plurality of apparatus for totaling and analyzing replies.
FIG. 20 is a flow chart of steps in an embodiment of totaling and analyzing method of this invention.
FIG. 21 is an outline block diagram showing an example of the apparatus for totaling and analyzing replies of replies in this invention.
FIG. 22 is an example of floor plan of the apparatus for totaling and analyzing replies in this invention placed in a hall.
FIG. 23 is a fundamental operating procedure in an example of the apparatus for totaling and analyzing replies in this invention.
FIG. 24 is a maintenance figure in an example of the apparatus for the apparatus for totaling and analyzing replies in this invention.
FIG. 25 is in an example of totaling display setting figure in the apparatus for the apparatus for totaling and analyzing replies in this invention.
FIG. 26 is an example of totaling result display figure in the apparatus for the apparatus for totaling and analyzing replies in this invention.
FIG. 27 is an example for displaying circular graph showing number of person in the apparatus for the apparatus for totaling and analyzing replies in this invention.
FIG. 28 is an example for displaying numeral numbers in the apparatus for totaling and analyzing replies in this invention.
FIG. 29 is an example for displaying question, reply and numeral numbers of replies in addition with a horizontal bar graph in the apparatus for the apparatus for totaling and analyzing replies in this invention.
FIG. 30 is an input figure in an example of the apparatus for totaling and analyzing replies in this invention.

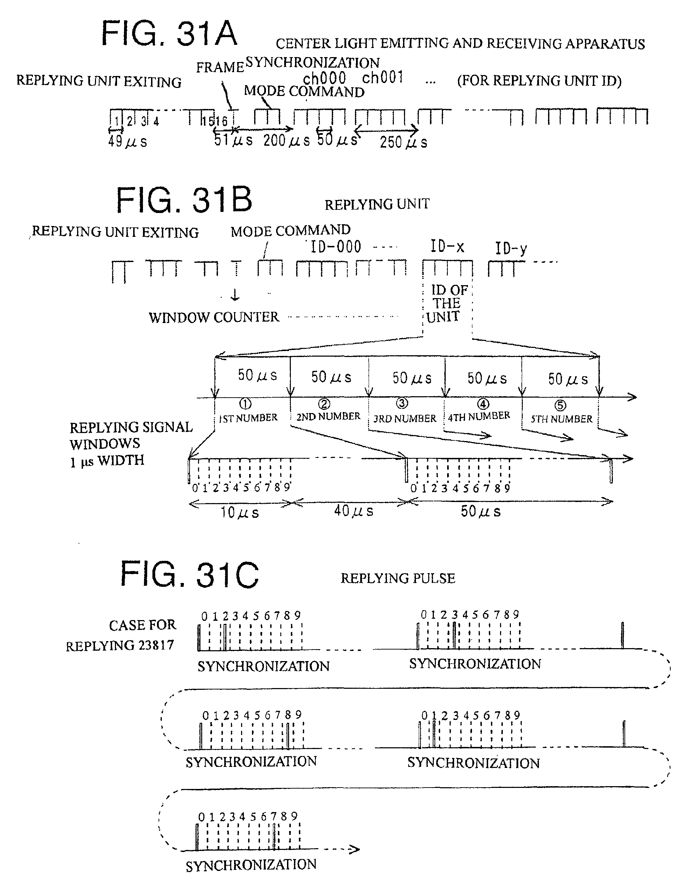

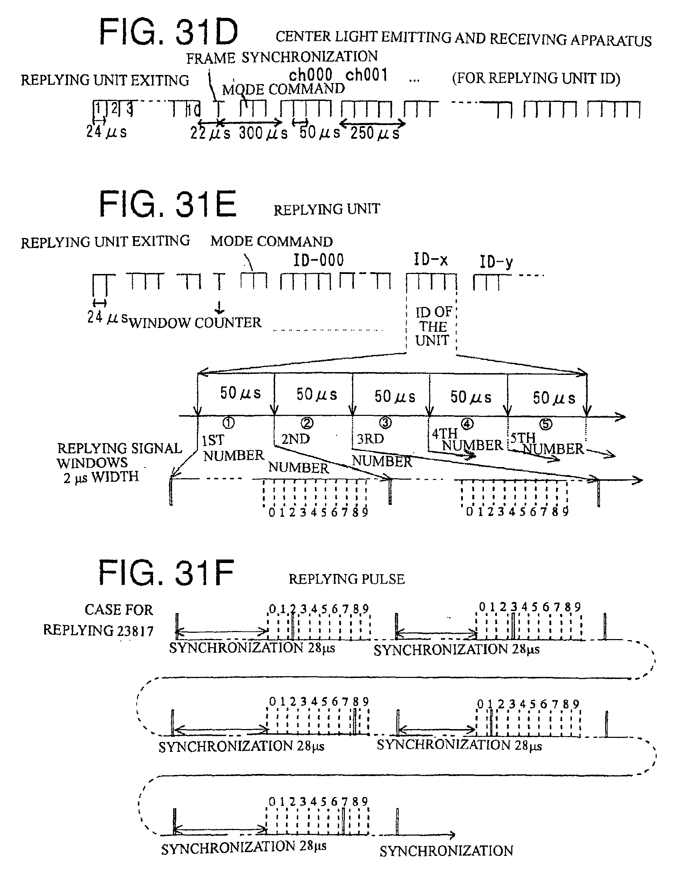

FIG. 31A shows schematically a command for directing replies emitted by center light emitting and receiving apparatus in an example of the apparatus for totaling and analyzing replies in this invention, FIG. 31B is the replying period, replying section and replying signal windows responding to the command for directing replies in FIG. 31A, and FIG. 31C is replying signal pulses outputted in the replying signal windows, furthermore, FIG. 31D is another example of a command for directing replies emitted by center light emitting and receiving apparatus, FIG. 31E is the replying period, replying section and replying signal windows responding to the command for directing replies in FIG. 31D, and 31F is replying signal pulses outputted in the replying signal windows in an embodiment of the apparatus for totaling and analyzing replies in this invention.
FIG. 32 is a block diagram showing a construction of a relating apparatus and center light emitting and receiving apparatus in an embodiment of the apparatus for totaling and analyzing replies in this invention.
FIG. 33 is a block diagram showing a construction of a replying unit in an embodiment of the apparatus for totaling and analyzing replies in this invention.
FIG. 34A, FIG. 34B, and FIG. 34C show examples of light emitting element arrangements of center light emitting and receiving apparatus in an embodiment of the apparatus for totaling and analyzing replies in this invention.
FIG. 35 shows an example of configuration of receiving portion of center light emitting and receiving apparatus in an embodiment of the apparatus for totaling and analyzing replies in this invention.
FIG. 36A and FIG. 36B show center light emitting and receiving apparatus mounted on a stand in an embodiment of the apparatus for totaling and analyzing replies in this invention.
FIG. 37A shows a construction of light emitting portion of a replying unit correcting light distribution in an example of apparatus for totaling and analyzing replies to this invention, FIG. 37B shows the horizontal light distribution and FIG. 37C shows the vertical light distribution mounted on a stand in an embodiment of the apparatus for totaling and analyzing replies in this invention.
FIG. 38A is the angular distribution of light obtained by the construction of FIG. 37A, and FIG. 38B shows light projecting range at a place of 50m apart from a light sending portion of the light emitting and receiving apparatus.
FIG. 39 shows a high stable high amplification rate amplifier for light receiving and amplification portion in an embodiment of the apparatus for totaling and analyzing replies of this invention constructed connecting circuits having digital elements in cascade to multi-step.
FIG. 40 shows an example of a high stable high amplification rate amplifier for light receiving and amplification portion of the apparatus for totaling and analyzing replies in this invention constructed parallel connection of digital element amplifiers.
FIG. 41 shows an embodiment of an amplifier having one-direction characteristics by alternately changing bias voltage with step at the multi-step amplifier shown in FIG. 39 in light receiving and amplification portion of an embodiment of the apparatus for totaling and analyzing replies of this invention
FIG. 42 shows an amplifier giving one-directional characteristics by using diodes at the amplifier shown in FIG. 39 of light receiving and amplification portion of in an embodiment of the apparatus for totaling and analyzing replies of this invention.
FIG. 43 shows an example of prier art amplifier applied for infrared light communication.

### Best Mode for Carrying Out the Invention

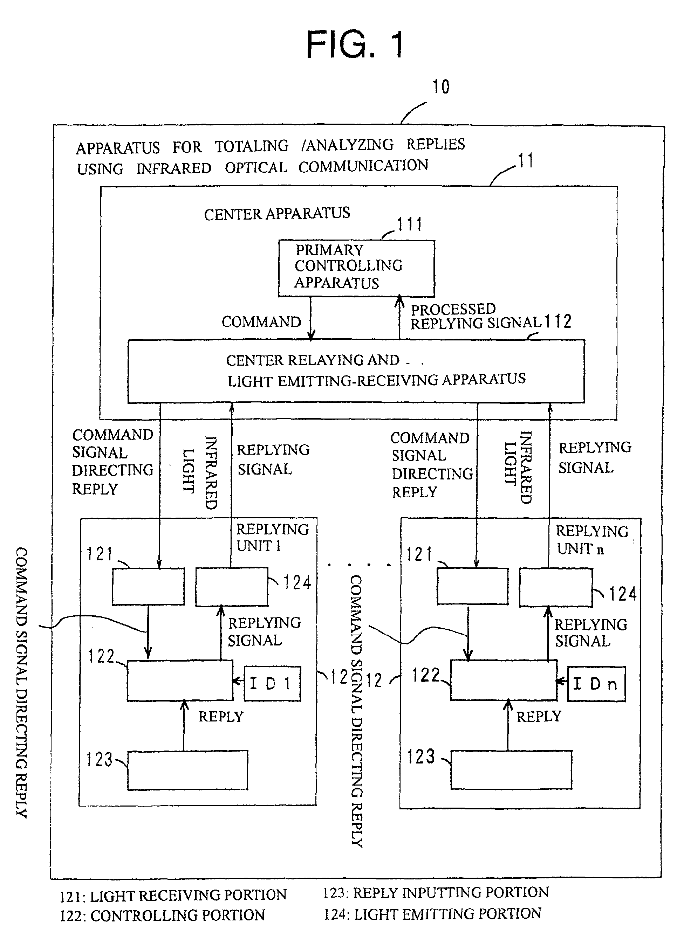

FIG. 1 shows a block diagram shoeing an embodiment of the apparatus for totaling/analyzing replies in this invention. In FIG. 1, the embodiment of the apparatus for totaling/analyzing replies 10 comprises center apparatus 11 and a plurality of replying units 12 connected by space propagating infrared lights. The center apparatus 11 comprises a primary control apparatus 111 and a center relaying and signal light receiving and emitting apparatus 112.

The primary controlling apparatus 111 of the center apparatus 11 issues a command for emitting command for sending replying signals obeying the operation by a person who present questions or an operator. The center relaying and signal light receiving and emitting apparatus 112 outputs command for sending replying signals obeying the command from the primary controlling apparatus 111 and emits toward a plurality of replying units 12 converting into infrared signals.

The replying unit 12 comprises light a receiving portion 121, a controlling portion 122, a reply inputting portion 123, and light emitting portion 124. A person who replies to the question inputs his replying to the question into the replying unit through the inputting portion and carries an action to emit infrared lights of replying toward the center relaying and signal light receiving and emitting apparatus. The light signal receiving portion 121 receives infrared light from the center relaying and light receiving-emitting apparatus 112 and send the signal to the controlling portion 122. The controlling portion 122 receiving the signal of command for sending finds the replying procedure, the replying period designated to the replying unit, for example, and outputs the replying signals corresponding to the reply inputted in the reply inputting portion 123 obeying the replying procedure. The light emitting portion 124 emits the output the reply signals outputted by the controlling portion 122 converting to infrared lights toward the center relaying and signal light receiving and emitting apparatus 112.

At the center apparatus 11 receiving a plurality of replying signals from the plurality of replying units 12, the center relaying and light emitting-receiving apparatus 112 receives the replying signals from the plurality of replying units 12, and recognizing replying signals from the replying period designated by the identification number as the replying signals from the replying unit 12 carrying the identification number. The replying signals are processed and transmitted to the primary controlling apparatus 111. At the primary controlling apparatus 111, the signals processed replying signals are totaled and analyzed.

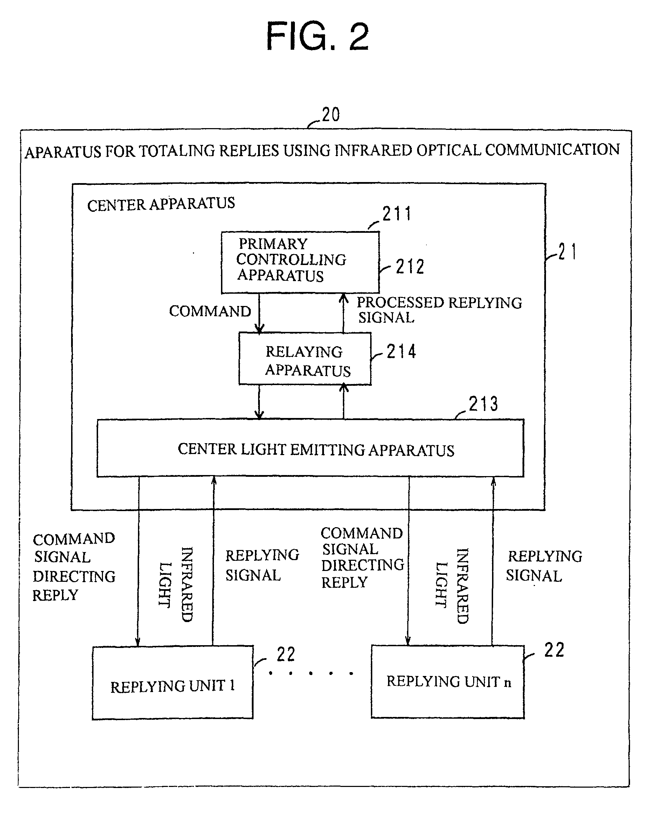

As shown in a block diagram of FIG. 2, a center relaying and light emitting-receiving apparatus21 of a center apparatus in a center apparatus for totaling and analyzing replies 20 can be a construction divided by a center light emitting-receiving apparatus 213 and a center relaying apparatus 214 in this invention. In this construction, the center light emitting-receiving apparatus 213 emits infrared light signals converting the command signals transmitted from the relaying apparatus 214, detects, and transmits replying signals to the center relaying apparatus 214 receiving infrared lights from a plurality of replying units 22. The replying signals are transmitted to the relaying apparatus 214, processed at the relaying apparatus 214, and transmitted to the primary controlling apparatus 211. The relaying apparatus 214, on the other hand, outputs command signals requesting replying signals obeying the direction of the primary controlling apparatus 211, transmits the command signals directing replying signals to the center light emitting-receiving apparatus 213. The command signals requesting replying signals are converted to infrared light signals and emitted to replying units 22 by the center light emitting-receiving apparatus 213.

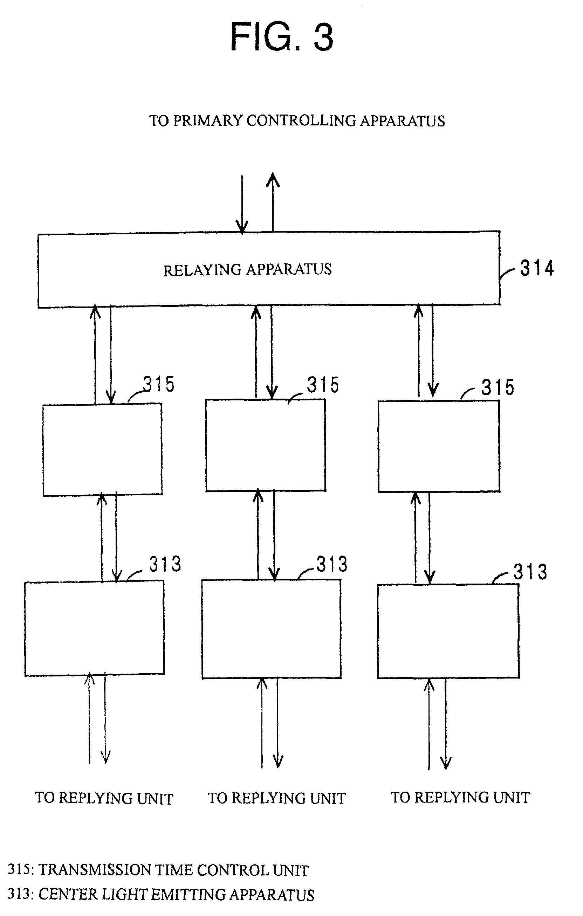

When the place for setting the an apparatus for totaling/analyzing replies is a large place, it is desirable to set a plurality of the center light emitting-receiving apparatus 313 and connect between the plurality of the center light emitting-receiving apparatus and the relaying apparatus as shown in FIG. 3. Since the distances between each center light emitting-receiving apparatus313 and the relaying apparatus 314 and the signal transmitting times generally differ in this construction, it is desirable to adjust the signal transmitting time by placing transmitting time adjusting devices 315. Communication cables adjusted to have the same length can be used to adjust the transmitting time as the transmitting time adjusting devices 315. Other delay device, such as delay lines and pulse delay circuits with variable delay time also can be used as the transmitting time adjusting devices. The delay device with variable delay time can be placed within the relaying apparatus adjusted to approach the difference of the transmitting time to zero by measuring and adjusting the delay time of the devices. The delay time measurements can be performed by running test pulses forward and backward.

The cases mentioned above is limited to the case that one relaying apparatus and a plurality of center light emitting-receiving apparatus are placed. The apparatus of this invention can be constructed using a plurality of relaying apparatus. In this case, the delaying time difference adjustment between a center light emitting-receiving apparatus and each of a plurality of relaying apparatus to zero can be performed using the same way for a relaying apparatus and each of a center light emitting-receiving apparatus described above.

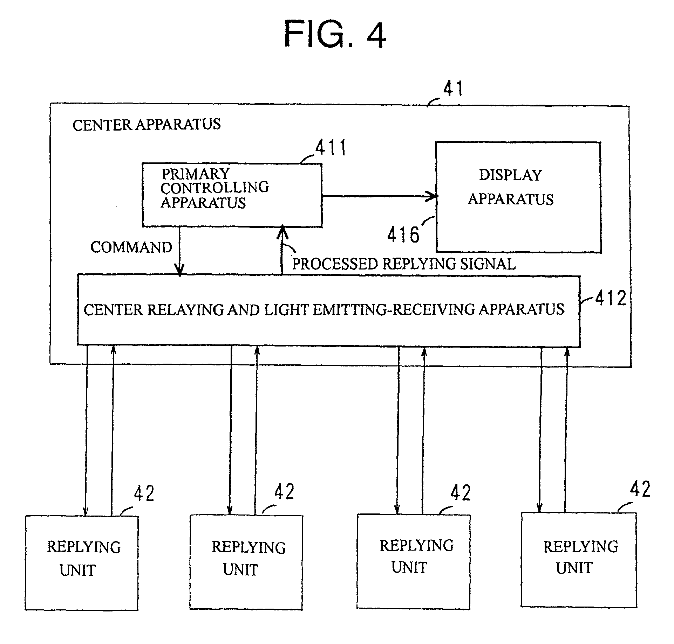

It is desirable that the questions inputted to store in advance and the questions inputted in real time are shown to request replies to the people who can send replies by a display device. Furthermore, it is desirable that the result of the totaling and analyzing the replies by the center apparatus can be shown displaying as a graph, for example, to the people by using a display device. FIG. 4 shows a center apparatus 41 of the apparatus for totaling and analyzing replies 40 equipped with a display device 416, which can disclose its totaling and analyzing results. By using the apparatus for totaling and analyzing replies having such construction, the people can respond to the following questions knowing result of replying for former questions.

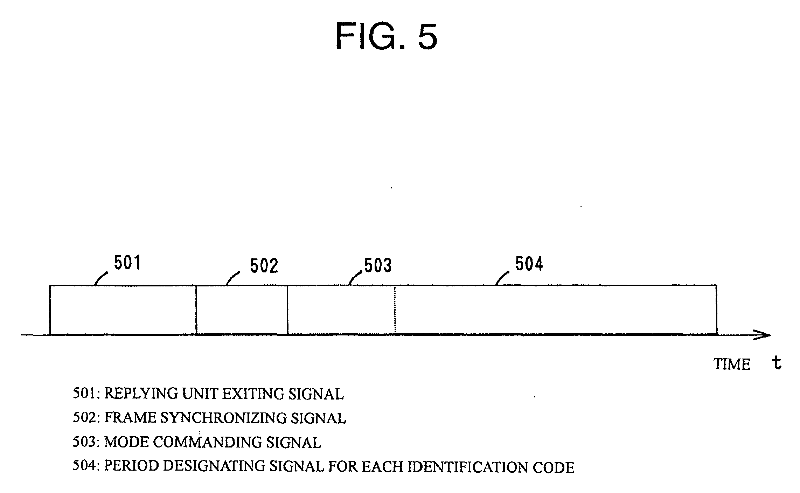

FIG. 5 shows an embodiment of a command for requesting replying signal emitting from center apparatus to replying units. The command for emitting replying signal comprises an exiting signal 501, a frame-synchronizing signal 502, a mode-commanding signal 503 and a replying period designating signal 504. In the first place, the plurality of replying unit is exited by the exiting signal 501, and then it gets synchronization by the frame-synchronizing signal 502. The mode of the plurality of replying unit is set up by the next mode-commanding signal 503. Each replying unit catches its replying period from the replying period designating signal 504 designated for each replying unit using its identification number.

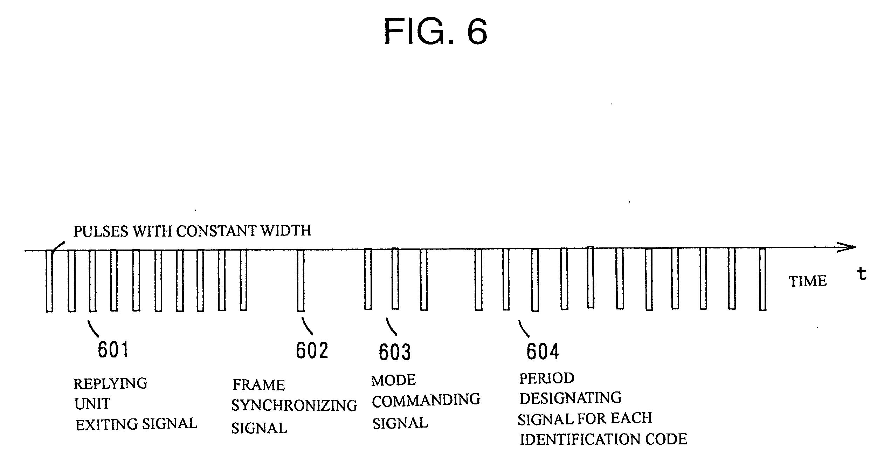

As shown in FIG. 6, the exiting signal 601, the frame-synchronizing signal 602, the mode commanding signal 603 and the following replying period designating signal 604 of the command for emitting replying signal can conveniently be made up by pulses having the same pulse width, where each signal component is distinguished by changing the pulse section. Each replying unit distinguishes the kind of command signal component from the pulse section in the command signal in this case.

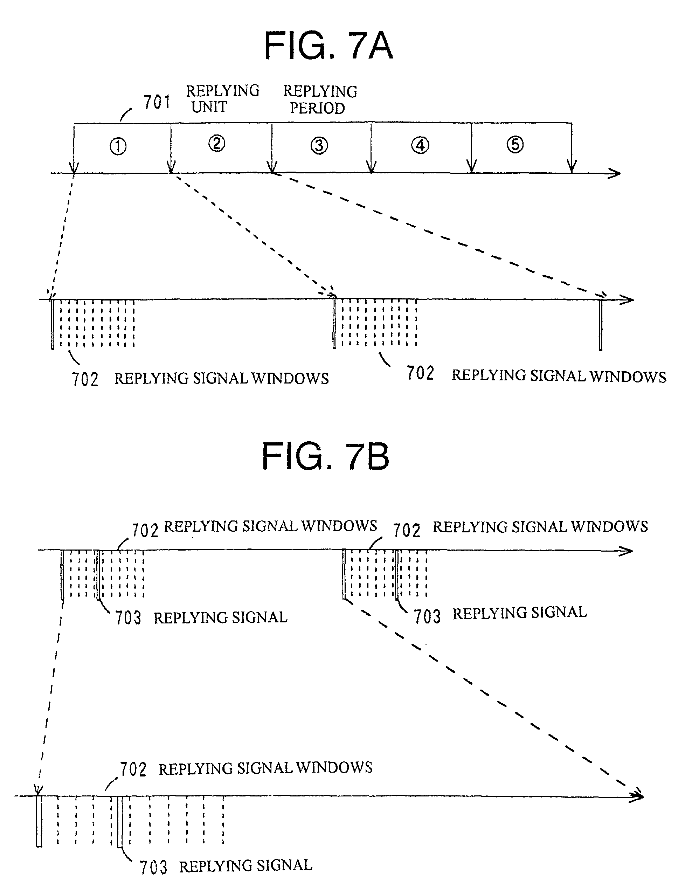

FIG. 7A and FIG. 7B schematically show replying signals emitted by a replying unit accepting a command for emitting replying signal. As shown in FIG. 7A, the controlling portion of the replying unit provides replying windows 702 in each replying section (1 to 5 in FIG. 7A) of the replying period 701 designated by the identification code. In the picture, ten replying windows corresponding to ten numerals from 0 to 9 are shown as an example. The controlling portion of the replying unit outputs pulses of replying signals in the replying windows as shown in FIG. 7B. Here 5 sets of 10 replying windows are provided to express a combination of 5 digit numbers as an example. The replying signals can express various other signals such as other digit numbers or alphabetical letters by changing the form of replying windows.

At the center apparatus, on the other hand, the replying signals in the replying windows provided in the replying periods designated by a identification code are recognized as the replying signals from the replying unit designated by the identification code and signal processed.

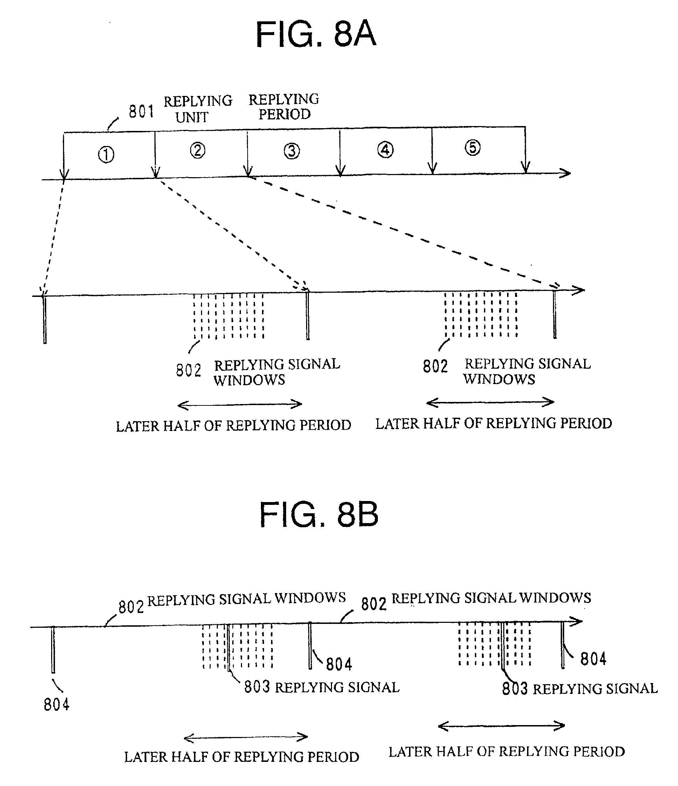

FIG. 8A and FIG. 8B schematically show an embodiment in which the replying windows 802 placed in the replying section (1 to 5) of each replying period 801 for each replying unit are placed at the later half of the replying period keeping the replying windows a distance from the synchronizing pulse 804 indicating the beginning of the replying section. It was found that the error rate of receiving the replying signals of the center apparatus decreased when replying windows 802 are placed at the latter half of the replying period distant from the synchronizing pulse804 in comparison with the case when replying windows 802 are placed near the synchronizing pulse 804.

It is desirable that the replying signal pulses are positioned at the beginning of each replying window. The positioning allows us to keep within the window even when amplified weak pulse signals from distant replying units showing delay due to the slow pulse rising time.

It is desirable in this invention that a person who replies to questions can recognize the receipt by an indication when the person sent the replying signal to the center apparatus and accepted. The indication of the receipt is placed on the replying unit is desirable although any indication method can be available for this purpose. An example for the method of indicating the receipt is to change the command signal for sending replying signal at the portion designating the replying period for the replying unit by the identification code to show the receipt when the center apparatus accepted the replying signal and recognized the identification code. Then the replying unit indicates the receipt when the unit received the changed command signal. The confirmation of sending replying signals can be performed turning the replying units to replying signal confirmation mode by mode commanding signal in the command signal.

When the totaling of replies is closed at the center apparatus side, the closing can be informed to all replying units and stop the emitting action of the replying units to suppress consumption of dry cells. The replying units can be stopped by the command signals including command for turning off from the center apparatus and suppress consumption of dry cells.

As an example of designating replying signal output by the command from the center apparatus in this invention, a case for the directing replying signal period is described above. The direction of replying signal output by the command from the center apparatus, however, is not limited to the designating replying period in this invention, but other directing methods for sending replying signal can be used.

Since the replying units in this invention are desired to have for long operation time driving by dry cells, it should be avoided to increase consumption of the dry cells by increasing intensity of emitting infrared light. So, the center apparatus must have an amplifier having a high amplification rate to catch weak signals from distant replying units. The center apparatus, on the other hand, must catch strong infrared signals from replying units near the center apparatus without stopping receiving function due to a saturation of the amplifier or other causes. The center apparatus must catch both weak and strong signals without fail.

The replying units also have to catch command signals without fail with high sensitivity even when the center relaying and lghti emitting-receiving apparatus is placed distant from the center relaying and light signal emitting -receiving apparatus and the command signal is weak. The units have to catch strong command signals without loosing its function by a saturation of the amplifier and so on even when the center relaying and lghti emitting-receiving apparatus is placed close to the center relaying and light signal emitting -receiving apparatus.

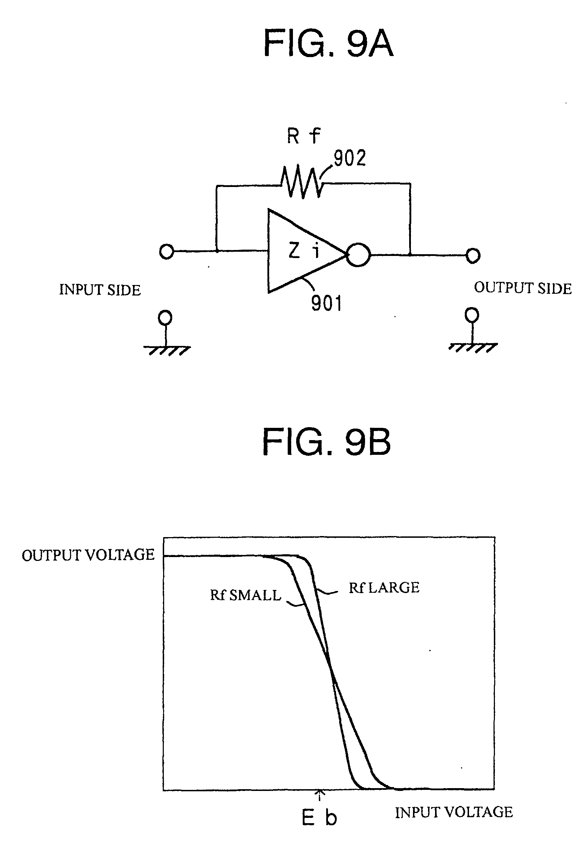

FIG. 9A shows one stage of a novel multi stage amplifier just fits to the replying unit and the center apparatus. As shown in the figure, the amplifier is composed of an amplification element 901 and a feedback resistor 902 connected to the element. As shown in FIG. 9B, the output voltage of the amplification element 901 shows a transition when the input voltage increases above a threshold value. The amplification element is a digital element, an inverter element and so on. The ratio of the output voltage change to the input voltage change can be controlled by connecting a feedback resistor 902 between the input terminal and the output terminal of the digital element as shown in the figure. As shown in FIG. 9B, the input voltage change can amplify by supplying voltage Eb such that that the output voltage changes due to the input voltage change is large enough. When an electronic element in which the transition input voltage is zero is used, the bias voltage can be kept zero voltage. In other words the bias voltage is not necessary.

The amplification rate of the amplifier circuit is given by Rf/Ri, provided that the input resistance, not shown in the figure, is Ri and the feedback resistance is Rf.

By using an amplifier comprising multi stage connection of this amplifier circuit to a center apparatus or a replying unit, the center apparatus or the replying unit can have high sensitivity for weak signals from distant signal sources, and can avoid stopping of the function caused by a saturation of the amplifier. In this circuit structure, output voltage is clipped by the limiting action of the element as shown in FIG. 9B for signals having excess input voltage, and keeps the amplification function for weak signals not limited by the limiting functin without stopped by the excessively large signal.

The novel amplifier can have many applications, other than the just fit application to the replying unit and the center light emitting-receiving apparatus.

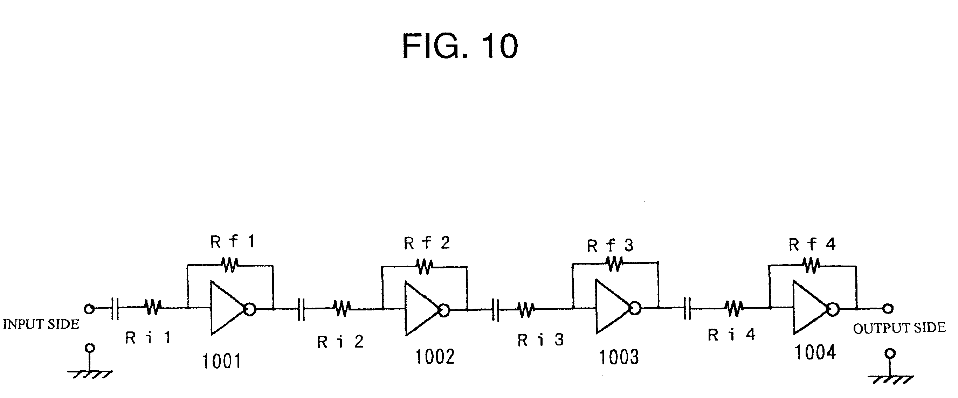

FIG. 10 shows a four stage amplifier with cascade connection of the amplifier circuit of 1001 to 1004 having the construction described above. High amplification rate and stability of the amplification can be ensured by choosing the resistor connecting between the input stage and the output stage and by choosing number of stages.

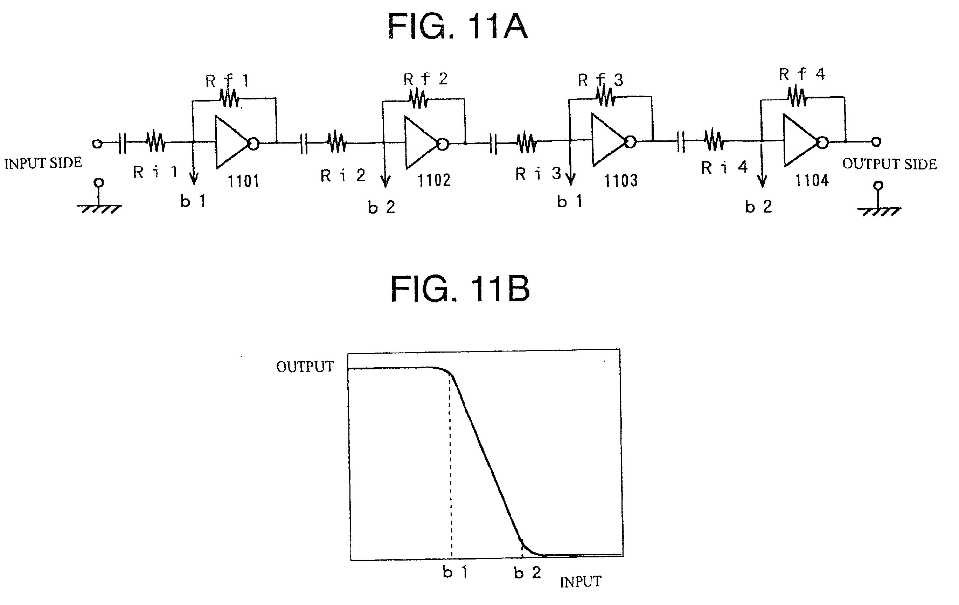

The infrared lights transmitted a free space are detected by photodiodes, for example, and converted into unidirectional pulse signals. The amplifier for amplifying the pulse signals is needed only to amplify the pulse in one direction. So, the inventors have developed an amplifier which amplify in one direction by adjusting input bias voltages for the amplifier having the cascade connection described above. Since the pulse signals amplified by the amplifier turns the polarity at every stage, the amplifier is constructed by a cascade connection of amplifier stages in which the input bias voltages are changed alternately with number of stages, in which the bias voltage of the first stage 1101 is positioned around the starting voltage b1 in FIG. 11, and the bias voltage of the next amplification stage 1102 is positioned around the ending voltage b2. As the result, the amplifier can be adjusted to have high amplification rate for weak signals and high durability to saturation caused by excessively high input voltage and other transit phenomena.

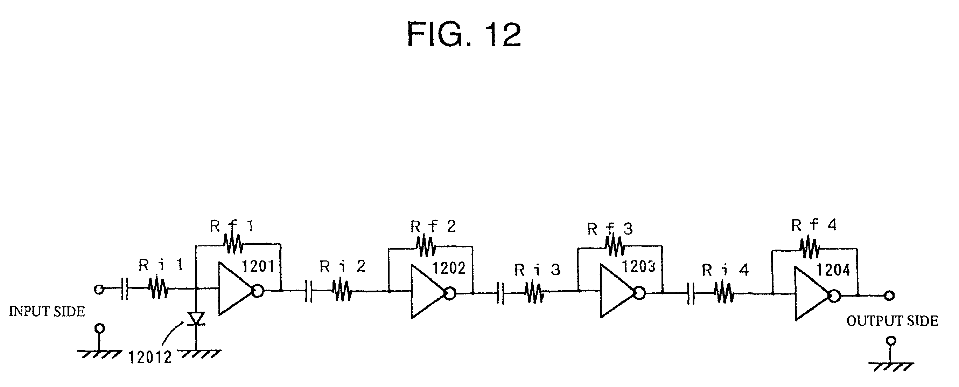

FIG. 12 shows an amplifier working as one directional amplification constructed using another construction method where an diode 12012 is placed at the input stage of an amplifier having amplification circuit stages 1201-1204.

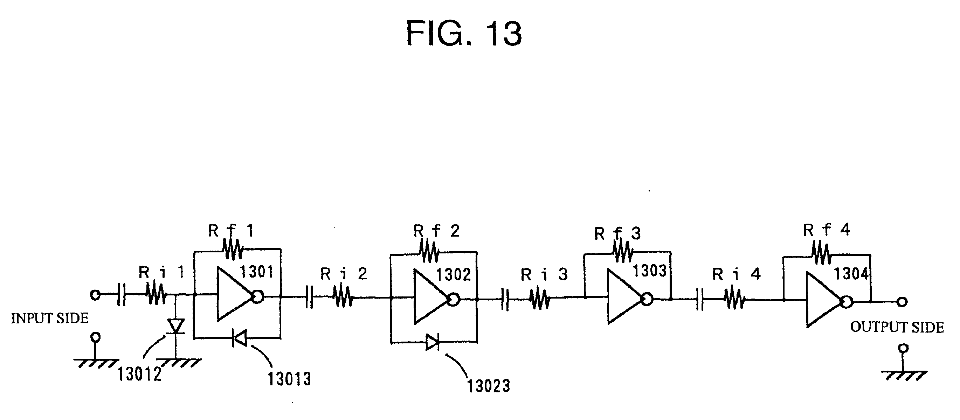

FIG. 13 shows a one directional amplifier using diodes and amplification circuit 1301-1304. Diodes are connected between the input terminals and the output terminals of the amplification circuits for first stage amplification circuit 1301 using diode 13013 and the second stage amplification circuit 1302 using diode 13023. The direction of the diodes are connected alternately from one stage to the next stage, such that one diode of the two diode is directed from input to output and the other diode is directed from output to input.

Of the multistage amplifiers set to have one directional amplification characteristics, described above, the amplifier in which input bias voltages are changed alternately is suitable as an amplifier at center light emitting-receiving apparatus since the amplifier has advantages of extended dynamic range and increased amplification rate. The amplifiers which uses diodes can be used as amplifiers for replying units since the production process does not include bias voltage fine adjustment process which is indispensable for producing alternately changing bias type amplifier.

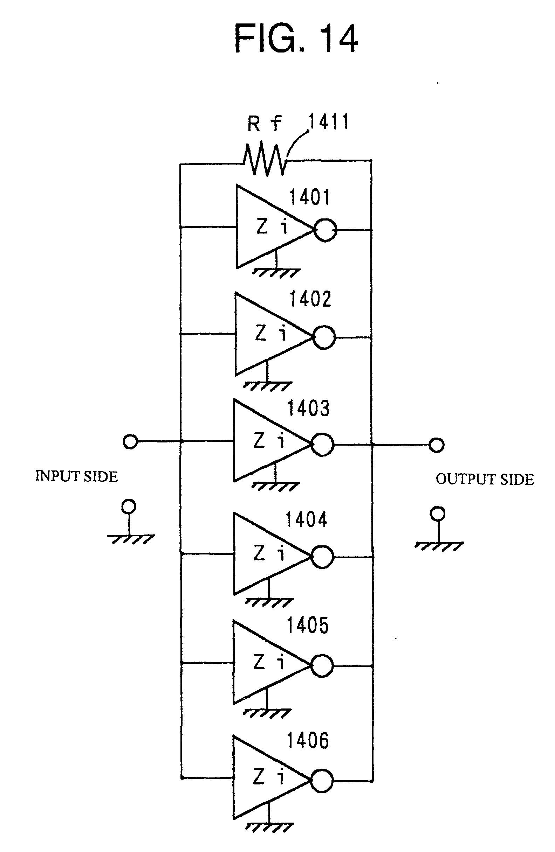

FIG. 14 shows an amplifier constructed by parallel connection of the amplification circuits comprising electronic elements which show output voltage transition caused by the input voltage change. The parallel connection can decrease the circuit impedance and can increase stability of the amplification circuit.

The light emitting-receiving apparatus for emitting and receiving infrared lights in this invention is as follows.

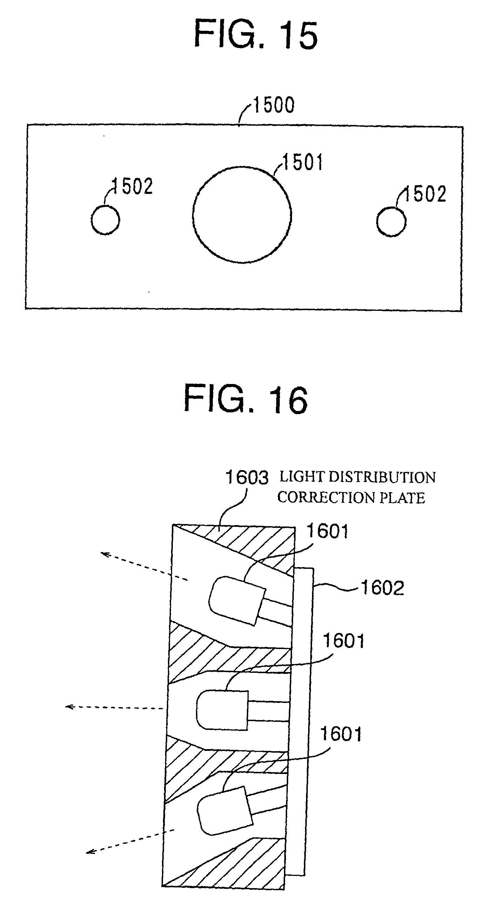

FIG. 15 shows a front view of a light receiving element 1500 of a center light emitting-receiving apparatus 1501 constructed combining narrow directivity light receiving element 1501 and broad directivity light receiving element 1502. The narrow directivity light-receiving element 1501 uses convex lenses to receive lights with narrow angles. This construction allows to receive both signals from replying units distributed at short distance and wide angle and weak signals from replying units at long distance.

Since the replying units are desirable to be constructed in small size and handy type with dry cell drive and long working time, consumption of much power for emitting infrared light is not desirable. The intensity of infrared light decreases with the distance by a third power of the distance. In order to obtain effective use of the infrared lights emitted from replying units, the light emitting elements having good light emitting efficiency were chosen, and emitting light distribution was devised by proper angular distribution of the light emitting elements and a light distribution corrector. FIG. 16 shows a cross section view of a light emitting portion of a replying unit constructed by a plurality of angular distributed light emitting element 1601 on a base plate 1602. A required light distribution was obtained by the combination of the angular distributed light emitting elements and the light distribution corrector. The light distribution correction plate 1603 is a plate that correct light distribution of lights emitted from light emitting element 1601. As shown in FIG. 16, the plate has a plurality of holes. Each hole leans its specific direction. The leaned holes accept light emitting element 1601. The leaned holes readjust the light intensity distribution emitted from the angular distributed light emitting diodes by shape, direction of leaning, and reflection from wall of the halls such that the replying signal emitted from the replying unit can arrive at the center light emitting-receiving apparatus. As the light distribution correction plate, lenses such as Fresnel lens, and filters can be used. The adequate emitted light distribution of the replying unit makes the infrared light transmitting to the center light emitting-receiving apparatus easy.

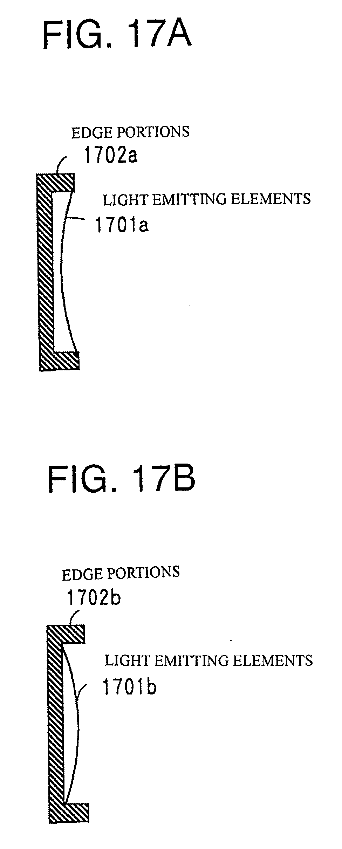

FIG. 17A and FIG. 17B show a schematic side cross section view of the light emitting portion of a center light emitting-receiving apparatus in an embodiment of this invention. The edge portions 1702a and 1702b surround the arrays of light emitting elements 1701a and 1701b. A cover transparent to infrared light can be placed in front of the light emitting portion and the light-receiving portion.

From comparison between FIG. 17A and FIG. 17B, it is found that the light emitting elements 1701a placed on a concave surface as shown in FIG. 17A are not disturbed by the edge portion of the center light emitting-receiving apparatus, and the light emitting elements 1701b placed on a convex surface as shown in FIG.17B, on the other hand, are disturbed by the edge portion of the center light emitting-receiving apparatus. Then the light emitting element array shown in FIG. 17A is preferable.

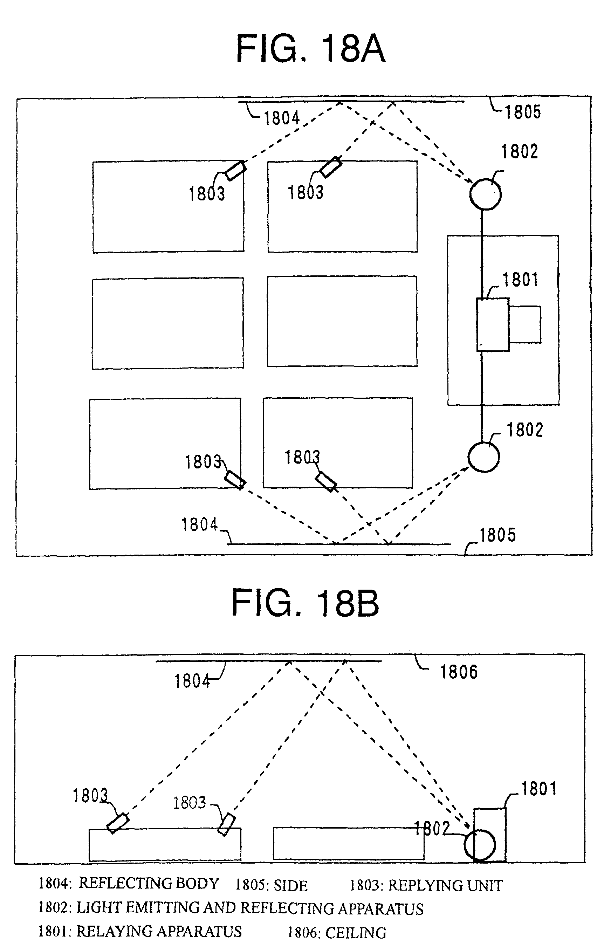

In some cases the place where the apparatus for totaling and analyzing replies is used have obstacles. Then the straight-line free space transmission of infrared light between the center relaying and light emitting-receiving apparatus and the replying unit is difficult. In this case, a reflecting body can be used for obtaining a communication route of free space infrared light transmission through the reflecting body. FIG. 18 shows free space infrared light transmitting communication between the center apparatus comprising relaying apparatus 1801 and light emitting-receiving apparatus 1802 and replying unit 1803 through reflecting body placed at the ceiling 1806 and at the sides 1805. FIG. 18A is the floor plan and FIG. 18B is the side view.

People who are going to reply the questions must emit infrared replying signal to transmitting targets such as the center relaying and light emitting-receiving apparatus, the light emitting-receiving portion of the light emitting-receiving apparatus or light reflecting body relaying the infrared light of the replying signals to these light receiving apparatus. The place where a meeting with an investigation work such as a questionnaire is held using the apparatus for totaling and analyzing replies is used may kept dark to show pictures on a screen to people. Even if the place is dark, transmitting targets such as the center relaying and light emitting-receiving apparatus, the light emitting-receiving portion of the light emitting-receiving apparatus or light reflecting body relaying the infrared light of the replying signals to these light receiving apparatus are desirable to have lighting elements indicating the transmitting targets.

The replying totaling and analyzing was not applied for cases of requiring many replying units because apparatus having many replying units was difficult. In this invention, replying totaling and analyzing using 1000 or more replying unit can put in practice.

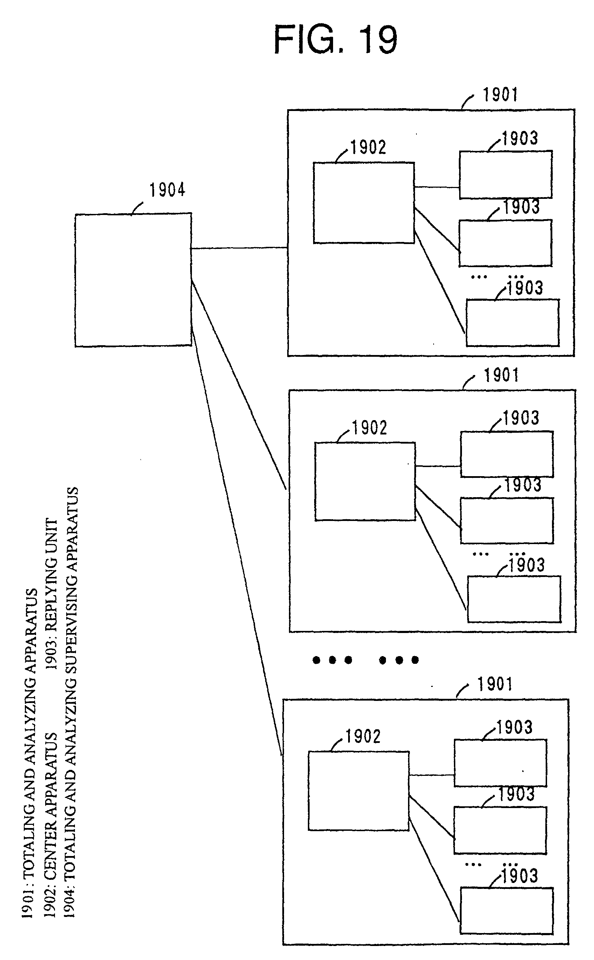

Apparatus for totaling/analyzing replies can be constructed combining a plurality of the apparatus for totaling and analyzing replies. FIG. 19 illustrate a block diagram of the system. Using the replying totaling and analyzing system 1901, the results of replying totaling and analyzing can be combined by the plurality of apparatus for totaling and analyzing replies 1904 comprising the center apparatus 1902 and a plurality of replying unit 1903. The apparatus for totaling and analyzing replies can give and take the totaling and analyzing results among the apparatus.

The system can be constructed among apparatus for totaling and analyzing replies located at mutually separated places. Communication among these apparatus can be made using an Internet communication system, for example.

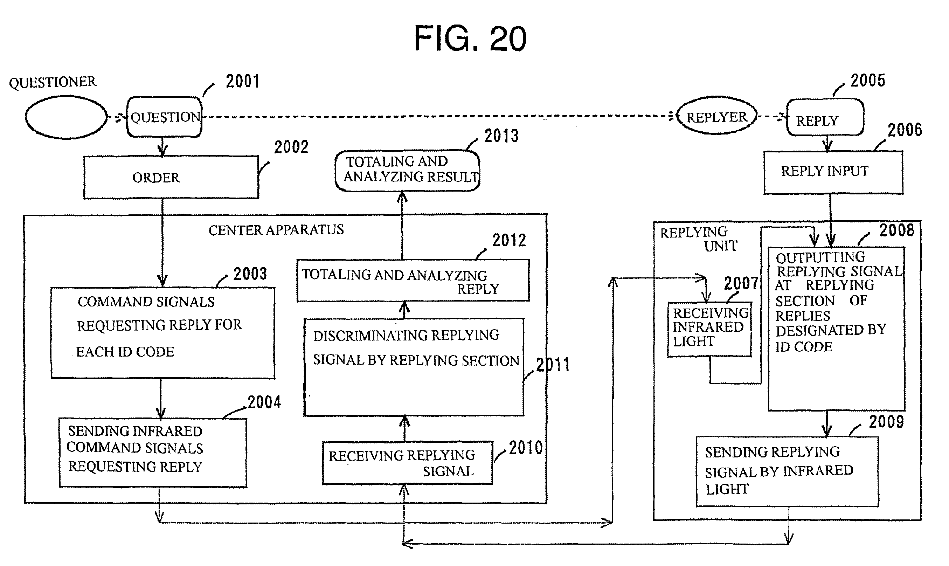

The replying totaling and analyzing using an apparatus for totaling/analyzing replies can be performed by steps, for example, as illustrated in FIG. 20.

As a questioner ask a question 2001 to people, the questioner or an operator issues an order 2002 to the center apparatus to perform replying totaling and analyzing. According to the order, the center apparatus works to output a command signal outputting 2003 requesting replying to replying units, and emit infrared light as transmitting 2004 of the command requesting replying to replying units. Then the center apparatus is ready for receiving replying signals.

Questioned people input replies 2005 in replying units and communicate to the center apparatus by space transmitting infrared lights, directing emitting-receiving portion of the replying units to the center relaying and light emitting-receiving apparatus of the center apparatus. At this time a replying unit transmit replying signals 2009, outputting the replying signal 2008 in the replying period designated for the replying unit receiving the command requesting replying signals 2007 and getting the specification of the replying period.

The center apparatus receives 2010 the replying signals transmitted from the replying units, identifies 2011 the replying unit which transmitted the signals, totals and analyzes the replies 2012, and then obtains a totaling and analyzing result 2013. The totaling and analyzing result 2013 can soon be informed to the attendant or questioned people by displaying, for example, on a large screen.

This invention will be explained more concretely by showing embodiments of the invention.

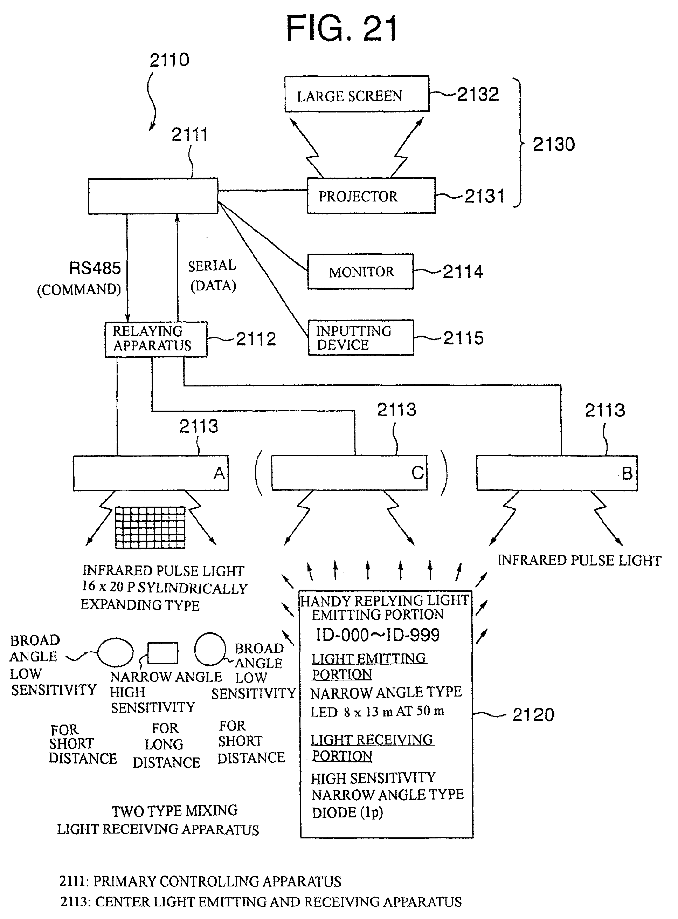

FIG. 21 is an outline block diagram illustrating an embodiment of the apparatus for totaling/analyzing replies in this invention. This apparatus for totaling and analyzing replies comprises a center apparatus 2110, primary controlling apparatus 2111, and relaying apparatus 2112, and a plurality of center light emitting-receiving apparatus 2113. The primary controlling apparatus 2111 of center apparatus 2110 comprises inputting device 2115 consisting of a keyboard and a mouse, and monitor 2114. The plurality of replying units 2120 and the primary controlling apparatus 2111 can be coupled by infrared light emitting-receiving through the relay apparatus 2112 and the plurality of center light emitting-receiving apparatus 2113. In this case, the primary controlling apparatus have display apparatus 2130 consisting of a projector 2131 and screen 2132. The screen can display questions and result of totaling and analyzing result of the replies. A display device can be equipped other than the display unit 2114 of the primary controlling apparatus for a chairperson or an operating person. The display device shows the same pictures with the pictures demonstrated on the screen.

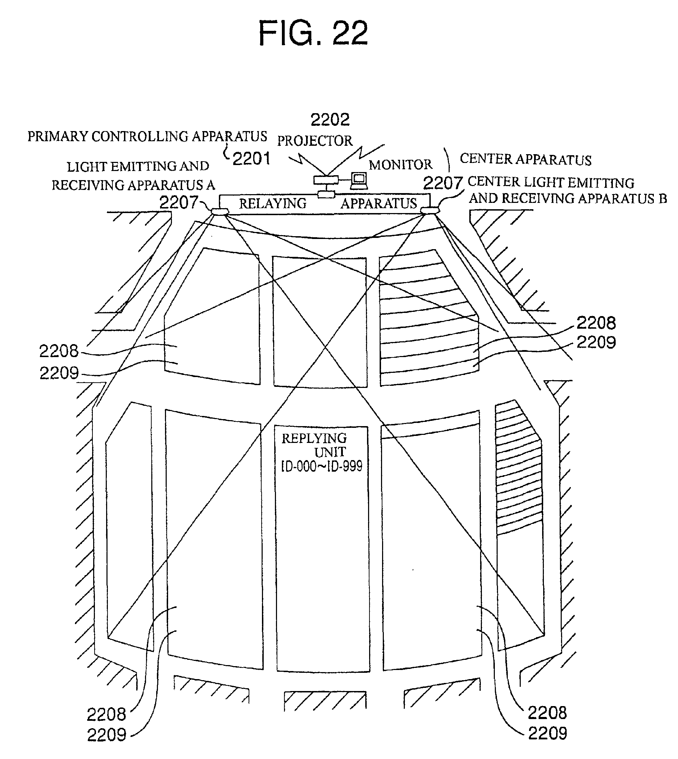

FIG. 22 is an example showing a disposition of replying units 2208 on each of seats 2209 for 1000 person who replying to the question in a conference room, in addition with a disposition of the primary controlling apparatus 2201 for communicating each replying unit 2208 and center apparatus, relaying apparatus 2206, center light emitting-receiving apparatus 2207, and monitor and projector 2202. After completing this disposition, a command for maintenance from the primary controlling apparatus 2201 is received by the replying units 2208 and sent back expressing the state of the units. The primary controlling apparatus 2201 can display recognize and display the number of the replying units and their states. This maintenance makes it easy to changes in number of questioned person and seats.

The replying unit 2208 is used for replying to questions. various types of the replying unit are possible depending on the styles of questions. So-called ten key type replying unit which is constructed to express a replying to a question by combinations of 5-digit decimal numbers. The replying unit can have windows displaying the inputted reply. On the other hand a replying unit which does not show the inputted reply is desirable in order to keep the reply inputted to the replying unit secret.

The projector 2202 can connect to the center apparatus to display the same display with the display or properly selected display on the monitor 2207 on a large screen disposed in the room. A plurality of display apparatus can properly disposed to show the same display.

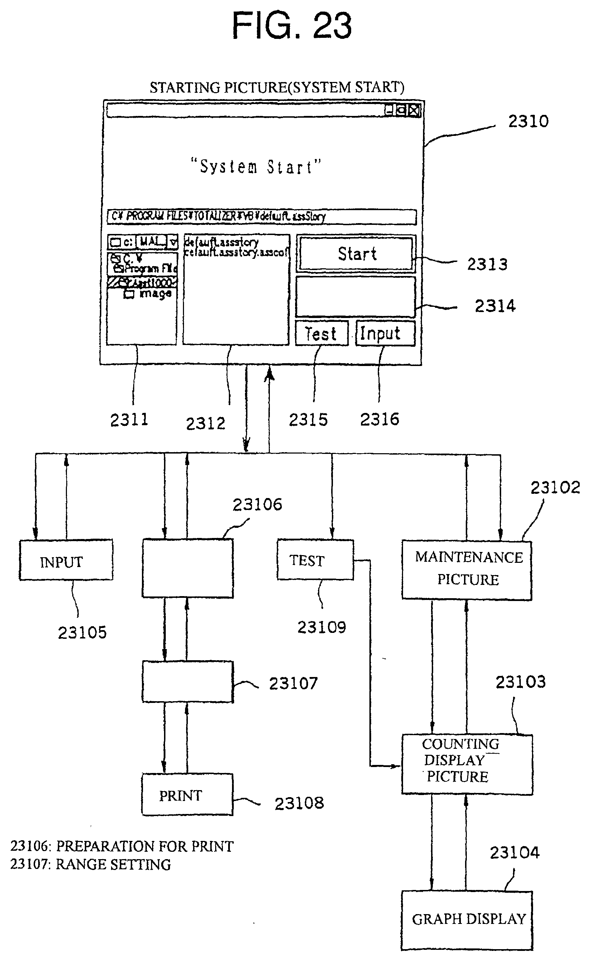

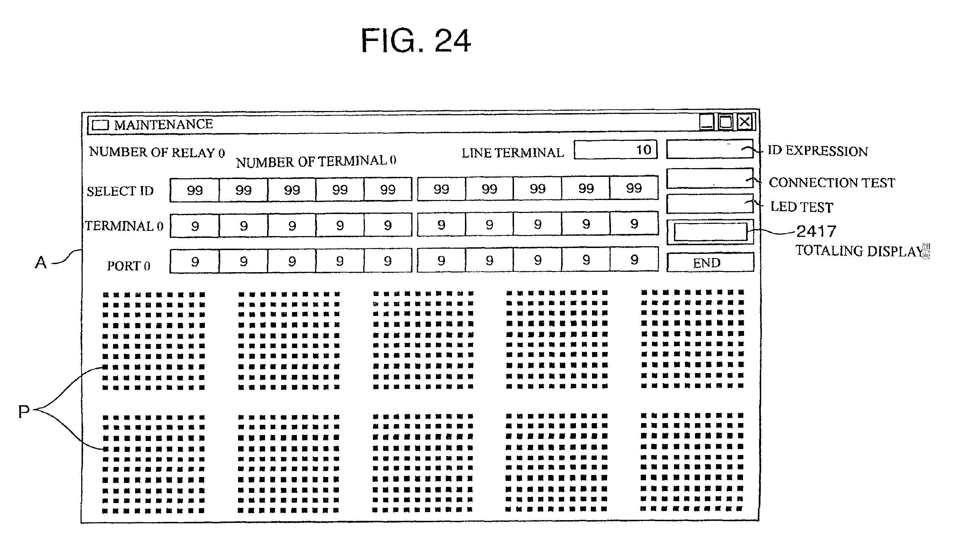

FIG. 23 shows a fundamental operation of the apparatus for totaling and analyzing replies. As turning on the apparatus for totaling and analyzing replies, the display panel of the primary controlling apparatus displays the starting picture 2310. The starting picture 2310 shows a starting button 2310, a start button 2313, a printing button 2314, a test button 2315, input button 2316, in addition with various file information at the memory means of the primary controlling apparatus. After checking file the name on the starting picture 2310, the start button 2313 is clicked. Then, the state of the apparatus goes to the step of maintenance picture 23102 shown in FIG.23, and the maintenance picture shown in FIG.24 is displayed.

The maintenance picture shown in FIG. 24 is for accepting maximum capacity of 1000 replying people. Upper half of the picture is information A about the relaying apparatus and the replying units. In the lower half of the picture, each of 1000 replying units are expressed by point P. The point P expressing each replying unit shows its state by the difference of color. The black shows that the unit has no connection, red for wrong, and green for normal.

Since each replying unit has its own identification code (ID), the replying unit emits a replying signal expressing the state of the unit in the replying period designated by the ID reading the infrared light pulse signals from the center light emitting-receiving apparatus has emitted.

When there are 1000 replying units, for example, the order of connection can be determined setting the ID number of 0 to 999 to these replying units. The ID setting can perform at each replying unit obeying predetermined procedure. The ID setting can perform by using ID setting apparatus a plurality of replying unit at once.

In this maintenance picture, a nonuse-replying unit such as assigned to an absent person, can be set as nonuse. The replying units can be divided by group of ID, sexuality, and region. The working characteristics of the replying units can be checked by replying signals replying ID numbers from the replying units.

After the preliminary work, using the maintenance picture, the questioner presents a question to the repliers. The question is displayed on a large screen, as the occasion demands. Then the repliers are requested replies. The question can be inputted from the keyboard, and questions stored in advance in the memory means of the primary controlling apparatus can be opened and used.

The repliers input their replies into the replying units. The input of the reply can set arbitrarily using ten-key such that 1 for yes, 2 for no, and 3 for the others. When there are five choices, the reply of the repliers can be selected from numerals 1, 2, 3, 4, and 5. A replier can select plural choices, and also can select plural choices giving priorities. When there are five choices, and 3, 5, and 1 are selected and inputted, we can define, for example, a questionnaire of inputting of (3, 5, 1) with 3 as first priority, 5 as second priority, and 1 as third priority. Furthermore, for example, there can be five choices with each ten examples of replies for one question and a replier can be required choosing one example as his reply, and so on.

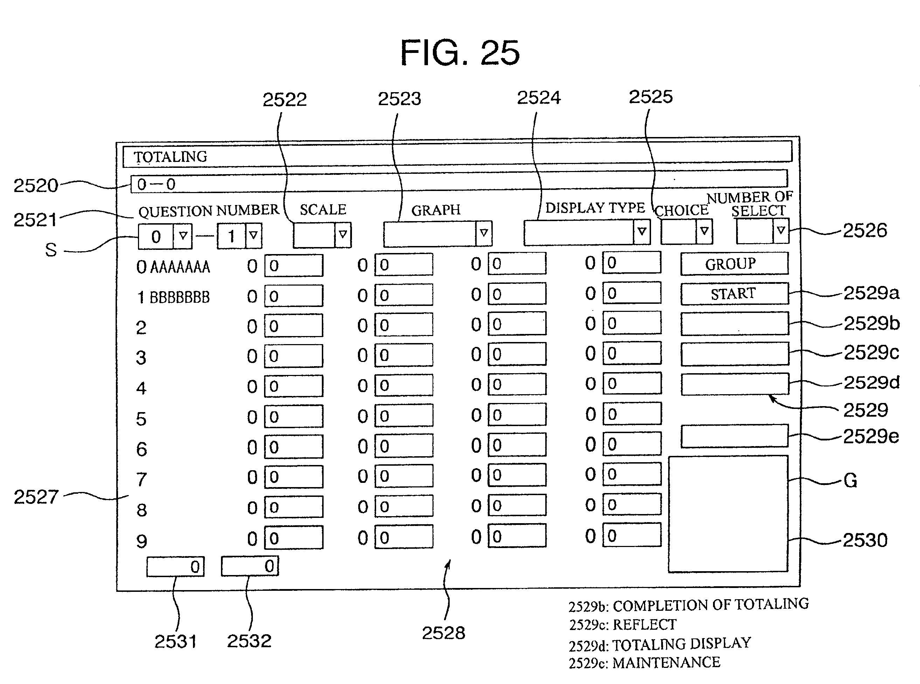

When totaling display button 2417 in FIG. 24 is clicked, the state of the apparatus goes to the step 23103, and picture of totaling display setting as shown in FIG. 25 is displayed. In this figure question display portion 2520 displaying content of questions and displaying method of results, question number setting portion 2521, scale setting portion 2522, graph setting portion 2523, display method setting portion 2524, choice setting portion 2525, number of select setting portion 2526, reply display portion 2527 displaying each question and reply, totaling result displaying portion 2528 displaying number of replies for each question, operating button 2529 for choice of grouping, totaling start, ending of totaling, reflecting the result. Displaying totaled results, and for maintenance, graph displaying portion 2530 displaying the results by graph, total number displaying portion displaying total number of repliers, and number of replies displaying portion 2532 are placed.

The question number setting portion 2521 comprises question main number setting column, question sub-number setting column. The question main number can set 100 questions. The question sub-number can set 20 for each main number, therefore, 2000 questions can be prepared. When one question is chosen, content of the question and its display method are displayed at the question display portion 2520 and the replies are displayed at reply display portion 2527.

At the scale setting portion 2522, Pull-down displayed "number of person display", "percent display", or "no display" can be chosen. Then, the number of replies at the totaling result displaying portion 2528 is displayed by "number of person display", "percent display", or "no unit". At the graph setting portion 2523, one kind of display can be chosen from graphs, "circle graph", "vertical bar graph" "horizontal bar graph", "vertical line graph", and "horizontal line graph", or from display of "numerical value of first choice", "yes/no", and "numerical display". Furthermore, a choice of add or not add "ranking" and "content of question" in the display. When "circle" is chosen, a circle graph obeying totaled result is displayed, and when "yes/no" is chosen, examples of the displays showing number or ratio of person who replied yes and no, at the graph displaying portion 2530 at the lower left of the picture.

At the display method setting portion 2524, display method displays results, time sharing display displaying predetermined time section, and real time display can be chosen.

At the choice setting portion 2525, setting of number of choice is carried. Number of choice can be chosen from 2 to 10. At the number of selection setting portion 2526, setting of number of selection the replier can select is carried.

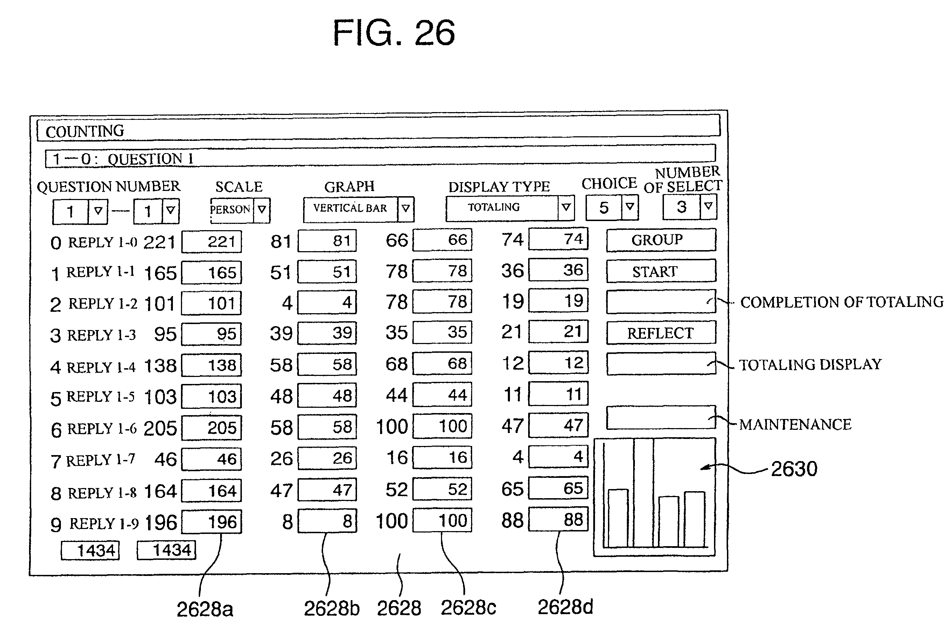

After these predetermined setting, the picture of totaling display setting in FIG. 25, the totaled results of the replies are displayed as illustrated in FIG. 26. FIG. 26 shows, as an example, a totaled results of question number 1-1 are shown with the scale by number of person, the graph by vertical bar graph, the display method number of choice by 5, number of selection by 3, and choice of grouping by grouping.

The total number of replies for 10 choices 0 to 9 is displayed at the first display portion 2628a of totaling result display portion 2628, and the numbers of replies to each group are displayed at the second to the fourth display portion 2628b, 2628c, and 2628d. At the graph etc. display portion 2630, a vertical bar graph obeying to the setting is displayed.

As the start button 2529a is clicked at the picture of totaling display setting, graphs of the totaled result are displayed on the screen of placed at the room.

After finishing a series of totaled result display, the picture of the panel comes back to the picture of FIG. 25 by pushing ESC button. Then the work can be shifted to the next question and similar totaling and display operations can be repeated. When all operations are finished, the maintenance button 2529e of FIG.25 is clicked, then the step of the apparatus is backed from step 23103 to step 23102 in FIG. 23, and the stage is further backed to step 23101 of starting stage by the end button and then the operation is finished. In the course of the operation, the previous content of questions and the result of the reply can be opened by clicking the totaled result display button 2529d,

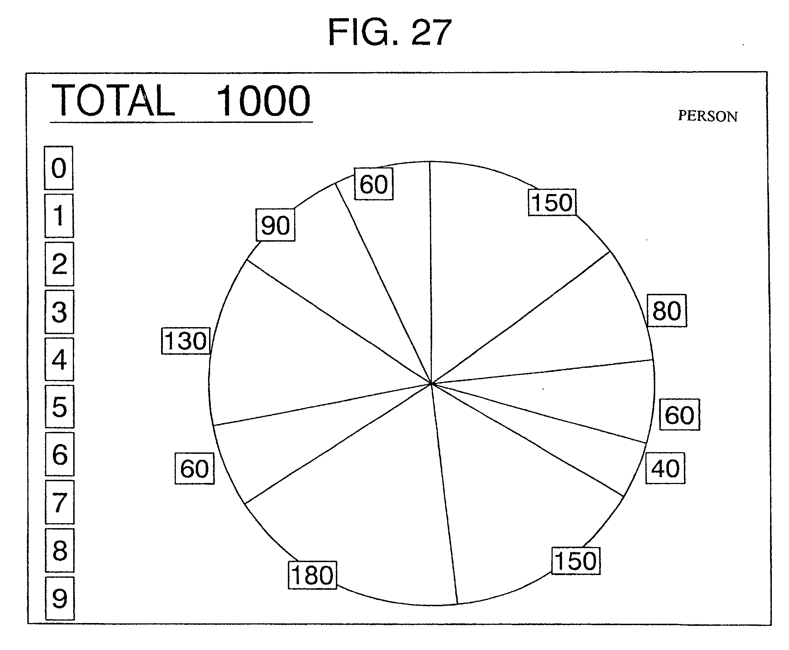

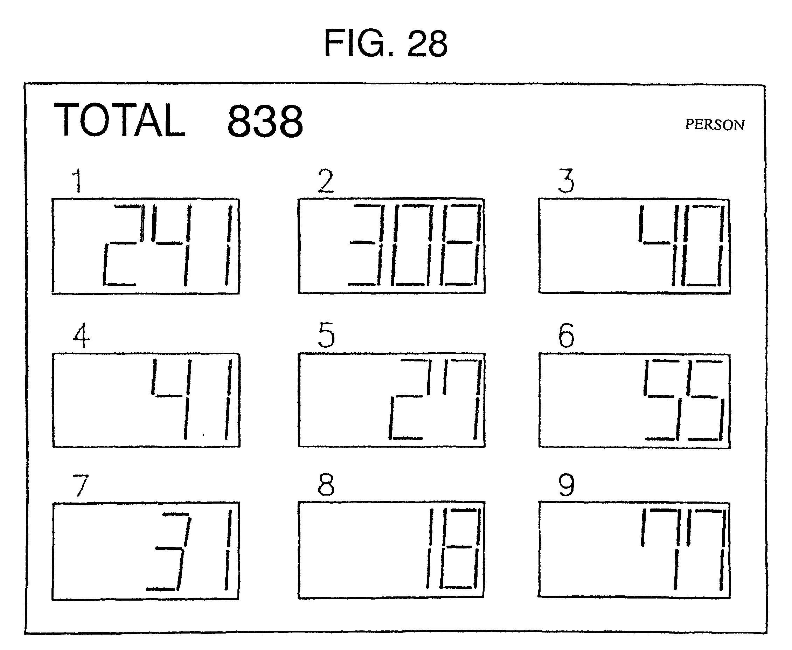

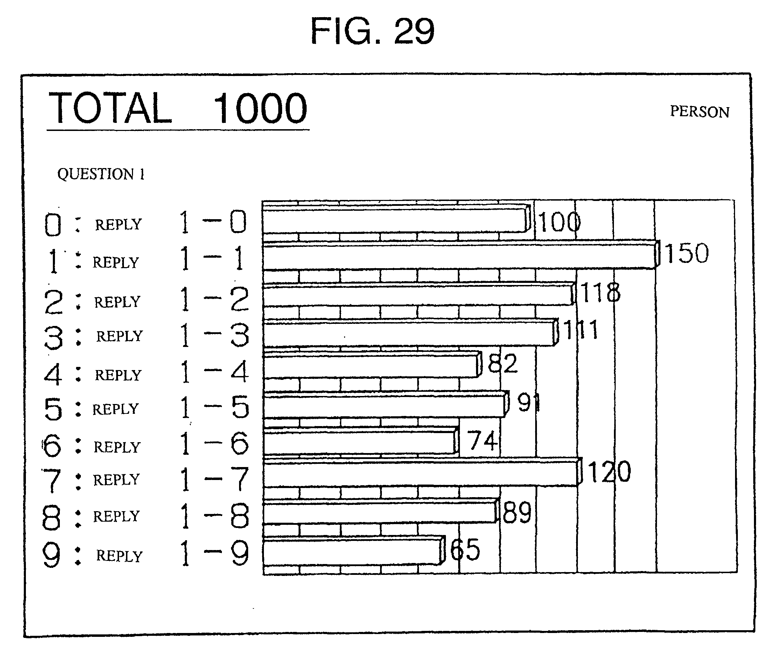

FIG. 27 to FIG. 29 show examples of displays such as graphs. The FIG. 27 is a circle graph of number of replies expressed by percentage added with number of person by number. The FIG. 28 is the result expressed by numbers. The FIG. 29 is a horizontal bar graph showing number of person for each question adding number of person by figures.

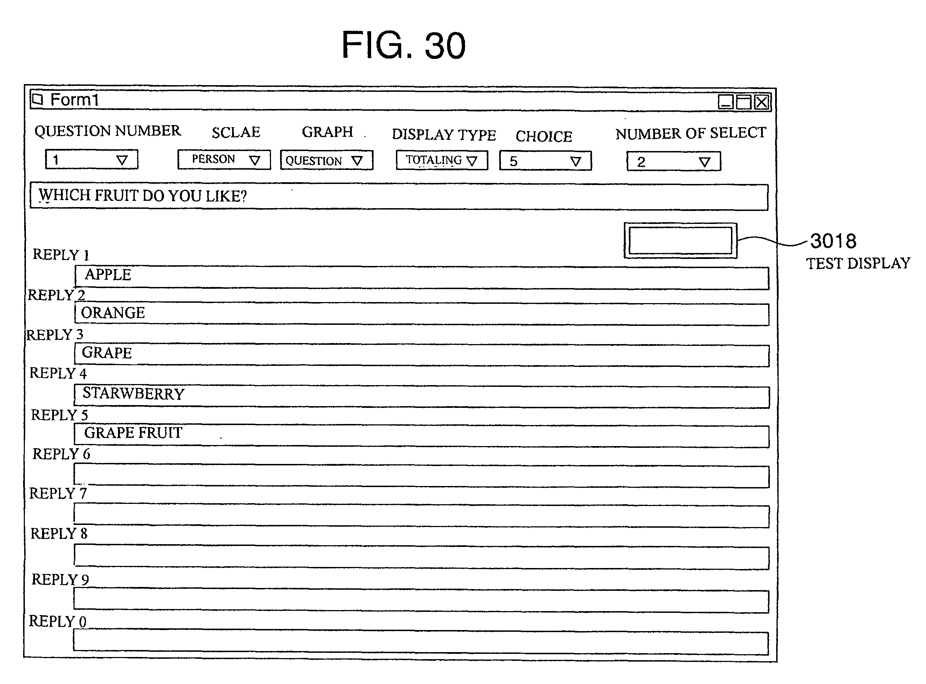

Returning to FIG. 23 of starting picture, the additional fundamental operation is explained. As the input button 2316 of FIG. 23 is clicked, the apparatus goes to step 23105, and input picture shown in FIG. 30 is displayed. This picture can be used for inputting questions and contents of choices. This picture is used for setting contents of questions, scale, graph, display method, choice, number of selection, and check and correction of contents stored in advance. As the test display button 2315 is clicked, setting condition can be checked by test displays obeying the setting condition.

As the printing button 2314 is clicked, the apparatus goes from the step 23106 of preparation for printing to step 23107 of setting of ranges. As the print button 2319 is clicked after the ranges of the question number and replying unit ID number setting is carried out, the apparatus goes to step 23108 and totaled result is printed out.

The test button 2315 of FIG. 23 is for display testing such as graphs by using random numbers as dummy replying signal as if replying signals were received. As the test button 2315 is clicked, the apparatus goes to step 23103 through step 23109. The check for the condition of totaling replies and display conditions by using the operation described above.

The flow and processing of transmitted and received signal of the reply totaling and receiving apparatus and practical apparatus construction will be described.

FIG. 31A to FIG. 31C, and FIG. 31D to FIG. 31F are timing charts showing the relation among command signal emitted from the center apparatus, the replying of the replying unit, and sending of the replying signals.

The replier inputs his reply to the replying unit and points the replying unit toward the center light emitting-receiving apparatus. At this time, the relay apparatus of the center apparatus reply to a command from the primary controlling apparatus based on the operation of a questioner or an operator, and the center apparatus emits a series of optical light pulses having pulse width of 0.5 µs as shown in FIG. 31A. The pulses in the series are formed to emit giving meaning to their emitting pulse interval and numbers, and to be understood by the receiving sides such that the receiving sides make replies met with the meaning. At first, 16 pulses having 49 µs time interval is sent as the replying unit exciting signal, then after 51 µs time interval, one frame-synchronizing signal, and a mode command signal are sent in 50 µs interval. After 200 µs from the frame-synchronization, 1000 sets of pulses for identification code (ID) totaling with 5pulses per one set (5000 pulses) are sent in 50 µs interval. The series of signal sets are sent out in repeat until the primary controlling apparatus issues a command for stopping. The mode command signal corresponding to three figures of decimal numbers is given the meaning to the position from the frame-synchronizing signal, and the numerical value is expressed by a window position where a pulse appear. So it can be carried such that a signal pulse corresponding to every figure determine windows for sending signal corresponding to the next figure and then the next pulse is sent out. In this case, sending out time width is less than 50 µs.

Responding to them, the replying unit, as shown in FIG. 31B, goes to a state of stand by, receiving the successive 3 pulses with 49 µs interval of replying unit exciting signal, and waits for the frame-synchronizing signal. Receiving the frame-synchronizing signal, the replying unit starts a counter for setting replying windows, begins setting of 10 windows for replying signal, for example, and gets ready for replying by reading received mode command signal. Then, pulses of replying signal corresponding to a replying content (the numerical value an replier inputted) is sent in the windows for replying signal when the totaling of ID pulse signals received successively after the mode command signal coincides with the ID. The replying unit repeats sending of replies every time the replying unit receives the set of signals from the center signal light emitting-receiving apparatus. The primary controlling apparatus, on the other hand, recognizes the replying signals using a method, for example, such that only the first signal the primary controlling apparatus received is adopted, and the signals after the first signal are neglected..

The replying signals of the replying unit are sent out 5 times in all successively converting into infrared light pulses at the leading part of the replying signal window corresponding to the reply every figure, when the reply inputted by the replier is 5 figures corresponding to 5 figures by decimal numbers. For example, replying periods of 50 µs x 5=250 µs width are assigned to 1000 replying unit in the order of IDs. It is set that the first replying unit with ID of 000 reply at the first period 200 µs (mode command signal 3 figures by decimal numbers receiving period = 60ns × 3 + margin) after the frame synchronizing, the replying unit with ID of 001 at further 250 µs later second period, and the replying unit with ID of 999 at 250 µs times 999 of about 250ms later 1000th period.

Each replying unit can determine its replying period itself by starting totaling at 200 µs using a built-in counter after receiving the frame-synchronizing signal. This method, however, has a possibility of loosing timing such as scattering of each reference oscillator. So the problem is avoided at the apparatus of this embodiment by totaling the synchronizing signal from the center apparatus and the built-in counter is used to complement receiving error.

Each replying unit, for example, can reply an reply corresponding to 5 figures by decimal numbers at maximum. As illustrated in FIG. 31, the numeral value of the figure by the window a pulse is placed assuming 10 replying signal windows divided by 1 µs interval at the leading part of every five 50 µs section in a period. Here, replying pulse of the case for replying "23817" are shown.

After receiving one replying pulse, the center light emitting-receiving apparatus neglects all arriving pulses in the 50 µs section. Counting of noise signal is avoided in this method.

A series of command signals directing replies sent from a center light emitting-receiving apparatus to replying units and replying signals of a replying unit as described above can be set up as shown in FIG. 31D to FIG. 31F instead of the setup described above. It is found that this setup can further increase the reliability of receiving each signal.

As shown in FIG. 31D, the replying unit exciting signal is formed by 10 pulses with 24 µs interval. Then placing 22 µs interval, one frame-synchronizing signal, and a mode command signal are sent in 50 µs interval. After 300 µs from the frame-synchronization, pulses for identification code (ID) totaling with 5 pulses per one set. The replying unit, responding to them, as shown in FIG. 31E, the replying signal windows with having of 2 µs are placed at later half of the 50 µs replying section as shown in FIG. 31E. In FIG. 31F, the sending pulses of the case for the replying pulse of "23817" are shown.

When weak infrared signals from distant place are received, the signals show pulses with long tails due to the used photoelectric transducer. So the received signals are pulsed at their rising up portion, and replied values are read out by finding the window in which the pulses are placed. Fluctuations such as signal delay time differences due to differences of distances are covered by the width of the window. The signal delay time difference due to the difference of position the replying unit is placed is about 300ns for the case of getting to a position of 50m and back. The value is sufficiently small compared with the width of the replying signal window width of 1 µs and covered by the window width. When the replying signal window width is set to 2 µs, larger margin can be obtained.

At the primary controlling apparatus, the data from the replying units for every synchronize-command signal cycle can be totaled and displayed. A questioner such as a chairperson can close the receiving of the reply at a point watching the state of the totaling. All data are transferred in about 0.25s in a case of 5 selection from 10 choices for 1000 replying units, and totaled up in 0.5s including totaling and analyzing process. The totaled result is obtained without keeping the questioner waiting. So the questioner can present the next question reflecting the result.

The definite construction of the apparatus is as follows. The primary controlling apparatus of the center apparatus in this totaling and analyzing apparatus is computer equipment installed with software for the totaling and analyzing of replies. The computer equipment is a host computer supervising all of this totaling and analyzing apparatus. Due to the commands from the host computer, infrared light signals are emitted through the relaying apparatus and the center light emitting apparatus toward replying unit. The signals from the replying units are received through the center light emitting apparatus and the relaying apparatus and are processed and are sent to the primary controlling unit.

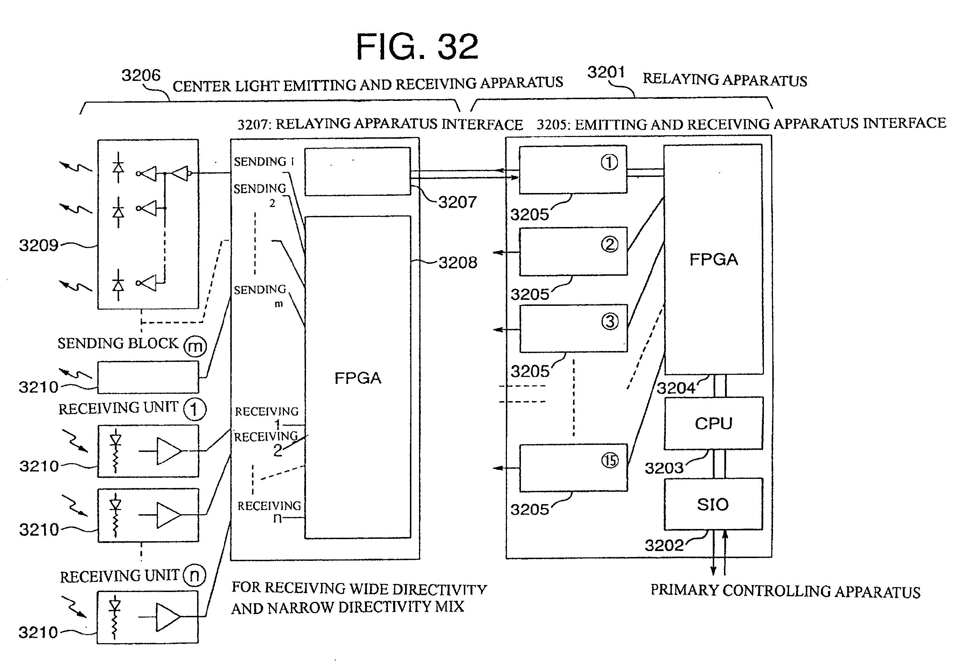

FIG. 32 shows the relaying apparatus and the center light emitting-receiving apparatus. In FIG. 32, a command from the primary controlling is sent to the relaying apparatus 3201, and is inputted to CPU (central processing apparatus) through SIO (input-output interface) of the relaying apparatus 3202, and then the command for directing replies described above is produced at the CPU 3203 and FPGA (field program gate-array) 3204. The command for directing replies is sent to the center light emitting-receiving apparatus 3206 through a light emitting-receiving apparatus 3205. At the center light emitting-receiving apparatus 3206, the command is passed through a relaying apparatus interface 3207 and signal processed at FPGA 3208 of the center the light emitting-receiving apparatus, and is sent toward the replying units at a sending block 3209.

Infrared light replying signals from the replying units are received by a receiving unit 3210 of the center light emitting-receiving apparatus 3206. The signals are processed at the FPGA 3208, passed through the relaying apparatus interface 3207 and light emitting-receiving apparatus interface 3205 of the relaying apparatus 3201, is signal processed by the FPGA 3204 and the CPU 3203. The signal processed response signals are sent to the primary controlling apparatus and are used for totaling and analyzing of the replies. The high speed processing obtained by combining the FPGA and the CPU is useful for realizing real time processing of the system. In comparison with this processing, a processing by using a CPU and software is inferior because processing speed is lower, although the processing flexibility is better.

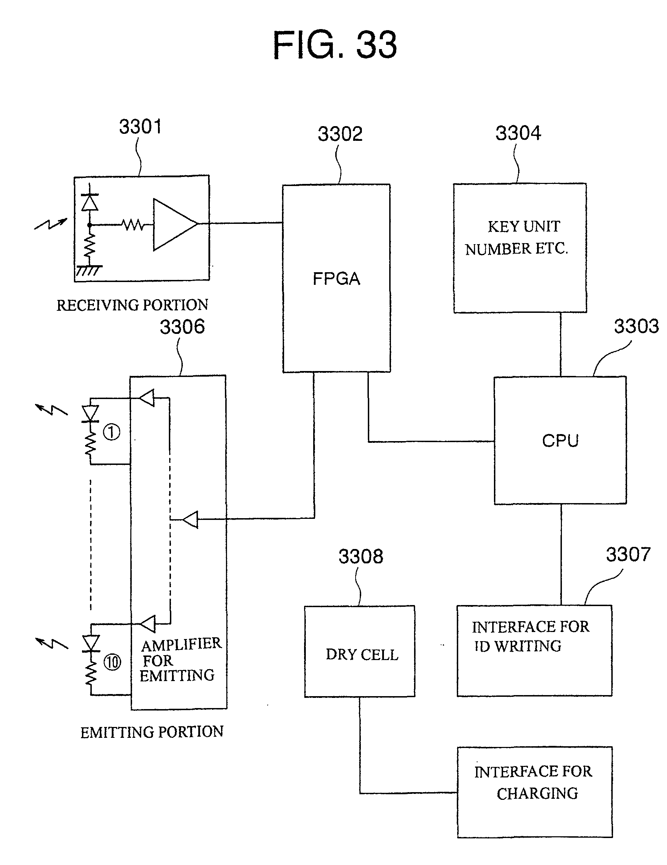

FIG. 33 shows a block diagram of replying unit of this embodiment. A command signals directing reply from the center apparatus is received at the light receiving portion 3301 of the replying unit, and is processed at the controlling portion composed by FPGA 3302 and CPU 3303. Replying signals corresponding to the reply inputted by the key unit 3304 of the input portion are outputted in the replying windows in the period designated to the ID by the command for directing replies. The replying signal is converted to infrared lights at light emitting portion 3306 and is emitted toward the center apparatus. The replying unit is power supplied by a cell system 3308 of a cell unit and a charging interface.

It is desirable that the center light emitting-receiving apparatus is desirable to be able to cover replying units of many replier in a large place by small number. The apparatus in this embodiment is designed to cover all by two as the disposition is already shown in FIG. 22. If necessary, the apparatus can use 3 or more, connecting to the relaying apparatus.

When the center light emitting-receiving apparatus are used in plural number, there is an anxiety of occurring recognition error at replying units which receive the signal provided that all center light emitting-receiving apparatus do not emit the infrared signal simultaneously. The relaying apparatus of this invention have a function to automatically compensate the signal transmitting time difference caused, for example, by the difference of connecting cables. FIG. 32 shows the block diagram of the center light emitting-receiving apparatus/relaying apparatus. Test pulses are sent simultaneously to each center light emitting-receiving apparatus connected to a light emitting-receiving interface. From the difference of the coming back time of the pulses. Calculation is made using FPGA. Then the differences of the delaying time are compensated when the signal is transmitted. The time difference due to the difference in length of connecting cable is, for example, about 30ns time difference for 10cm length difference. This compensating function facilitates setting of the apparatus because it is not necessary to be nervous about the differences of the cable lengths.

As already shown in FIG. 22, when we are cover all by 2 center light emitting-receiving apparatus, the reliability of the communication is kept by the disposition of the apparatus such that the ranges the two apparatus cover have appropriate overlapping. The signals sent and received with replying apparatus at short distances has high intensity and distribute over wide angle, whereas the signals sent and received with replying apparatus at long distances weak and distribute only narrow angle. The center light emitting-receiving apparatus in this invention, a plurality highly dispersive light emitting element is arranged in a special way at the light emitting portion and a plural kind of light receiving element with different directivity is combined at the light receiving portion by performing computer simulation and experiment using apparatus built up for testing.

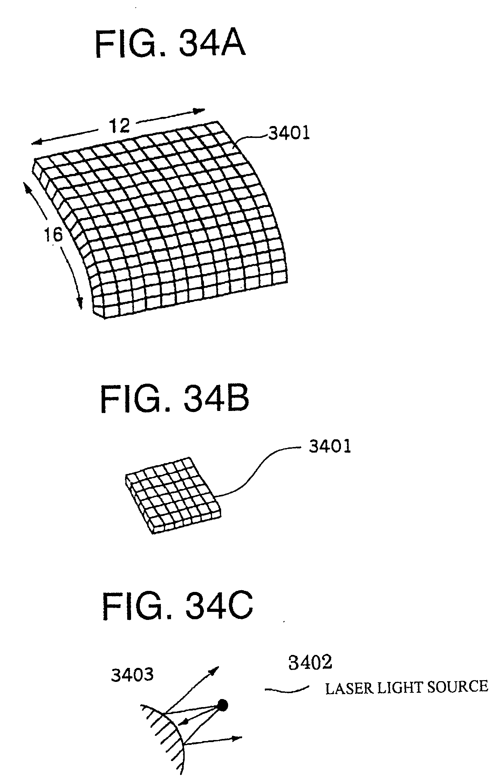

FIG. 34A to FIG. 34C show an example of the light-emitting portion of the center light emitting-receiving apparatus constructed the way described above. In FIG. 34A, 16 light emitting diodes 3401 are arrayed in an arc, and then the 16 light emitting diodes arrayed in an arc are arrayed by 16 horizontally. FIG. 34B shows a construction in which LED's 3401 are arranged 6 x 6=36 in plane, and FIG. 34C show an example of construction in which laser diodes are combined with an optical system 3403.

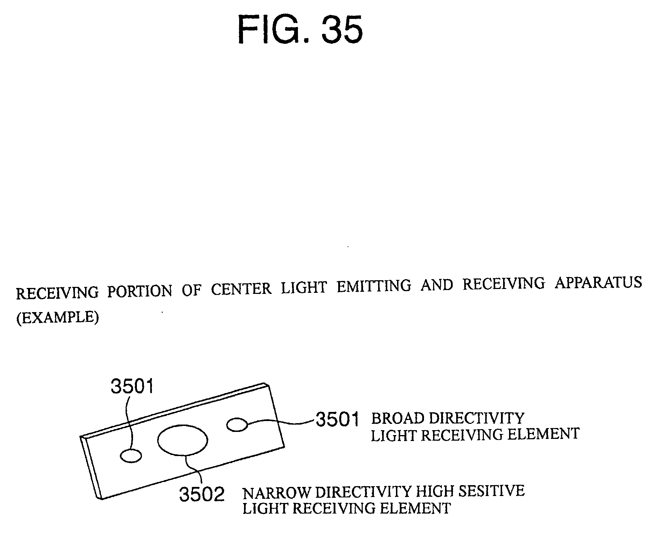

It is hoped that the light receiving portion of the center light emitting-receiving apparatus is constructed to be able to catch infrared signals certainly combining both broad angle light receiving portion where broad directivity light receiving element for strong signals with broad angle incidence from replying unit at short distance and narrow angle light receiving portion for weak signals from replying unit at long distance. FIG. 35 shows an example of a light receiving portion of a center light emitting-receiving apparatus which can cover 1000 replying unit at broad place. In this case, 2 broad directivity light receiving element 3501 and 1 narrow directivity light receiving element 3502 are arranged in a body.

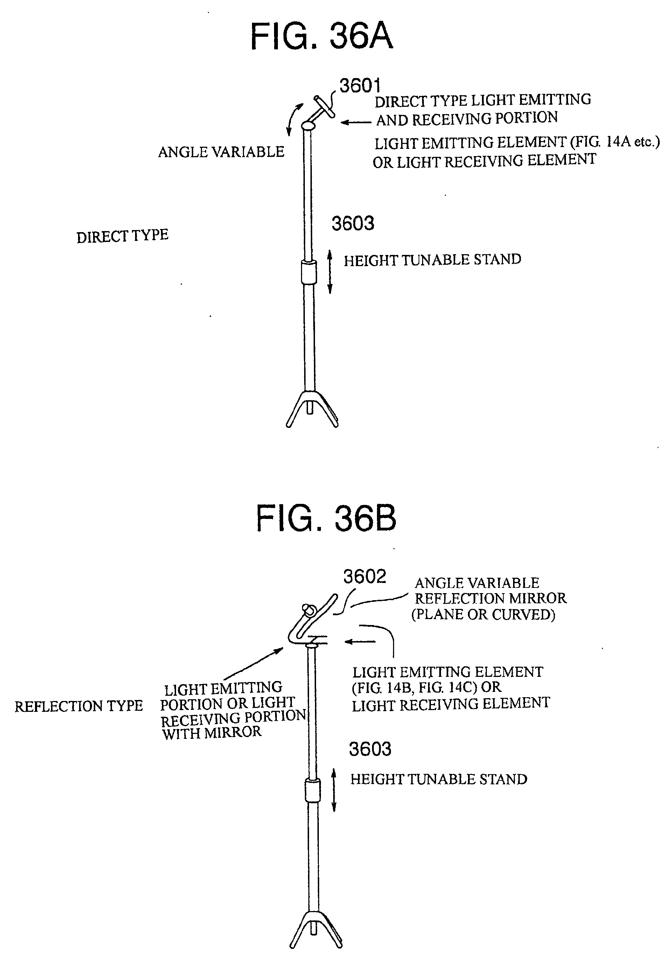

This light emitting portion and light receiving portion can be mounted at a stand having an mechanism of height adjustment with rotating horizontally and cylindrically. Then a center light emitting-receiving apparatus possessing desirable light distribution and light receiving characteristics for repliers carrying replying units can be obtained as shown in FIG. 36A and FIG. 36B.

Center light emitting-receiving apparatus are disposed ordinary at platform side in a place when the number of the center light emitting-receiving apparatus is not many. The apparatus in this embodiment is ready for increasing the number up to 15. Sending and receiving of signals can be stabilized and range of sending and receiving signals can be expanded by disposing center light emitting-receiving apparatus everywhere, for example, not only on the platform, but also at appropriate position in a plural. The center light emitting-receiving apparatus for the distributed disposition can be constructed by combining the light emitting portion shown in FIG. 34A and the light receiving portion shown in FIG. 35, or by combining the light emitting portion in which number of light emitting element is decreased as shown in FIG. 34B or laser is used as shown in FIG.34C and the light receiving portion. The apparatus can be the direct type center light emitting-receiving apparatus 3601 as shown in FIG. 36A, or reflection type center light emitting-receiving apparatus 3602 as shown in FG. 36B. The apparatus can be small and can be treated with ease by mounting on a stand 3603 having an mechanism of height adjustment.

A replying unit each replier carries is required to cope with the fact that the sending and receiving transmission energy of the infrared light decreases inversely proportional to the distance. A replying unit, on the other hand, is required to be dry cell drive and handy type, and is hoped to be inexpensive. Therefore, the replying unit is required to suppress dissipating power by simplifying the circuit and getting sending output efficiently. In addition, the replying unit is required not to suffer with the effect of saturation caused by short distance large intensity signal, furthermore, to have a receiving function soundly catching especially weak signal from long distance. Then power has been saved by regulating to use 3.2v single power supply. Photo diodes have been used effectively by improving their combination and disposition. Amplifiers for the receiver have been developed which have especially high amplification factor and yet not have effect of saturation. Furthermore, real time high level (question/totaling analyzing of reply) high-speed reliability has been pursued.

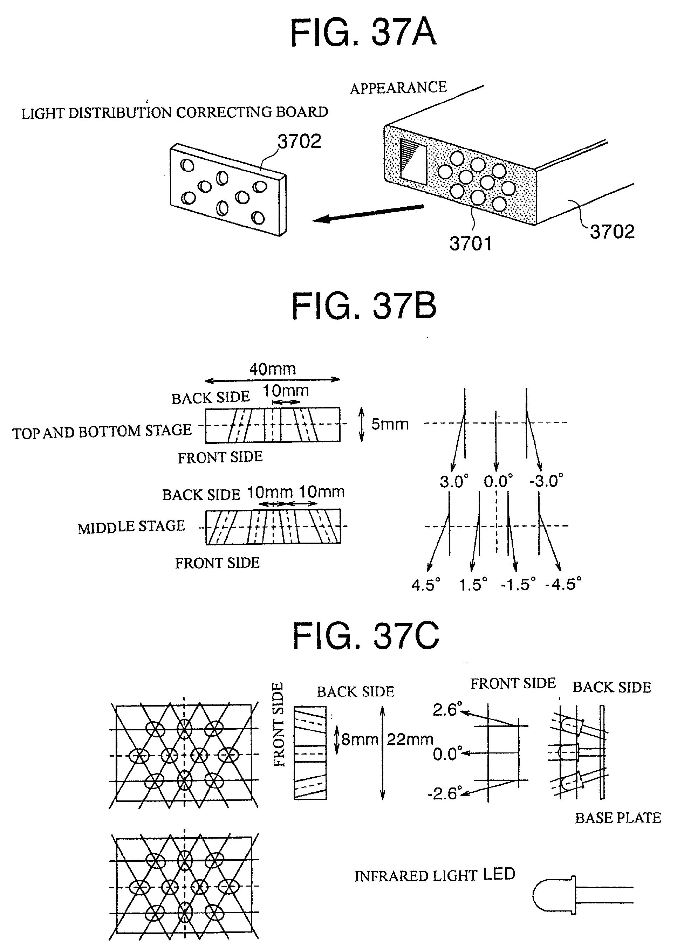

At the light-emitting portion of this invention, 10 light emitting diodes available at high frequency are placed in a case having a special light distribution characteristics (light emitting plate) and are work simultaneously with 500 ns pulse width and high duty ratio of 1100. FIG. 37A shows an example of light emitting portion designed by using results of both computer simulation and trial manufacturing where 3701 show LED's, 3702 shows outer case, and 3703 shows a light distribution correcting plate. FIG. 37B is a cross section view of the light distribution correcting plate and a figure showing the light distribution in horizontal direction. FIG. 37C shows a cross section view of the light distribution correcting plate and a light distribution in vertical direction.

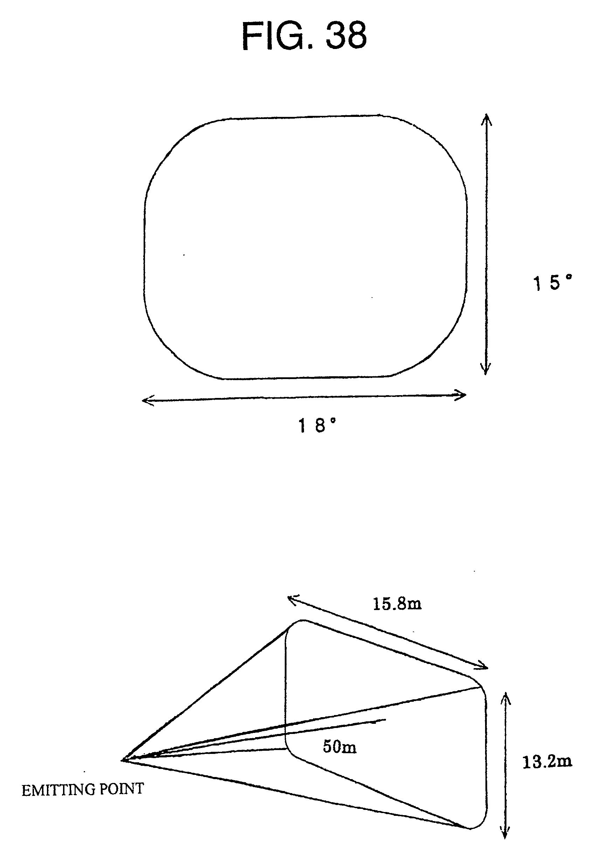

FIG. 38A and FIG. 38B show experimental data of infrared light projecting range for the light-emitting portion shown in FIG. 37A-FIG. 37C. In this example, a infrared light emitted expanding 3° each both left and right and 2.6° each both up and down expands to ±9.0° in horizontal direction and ±7.5° in vertical direction as shown in FIG. 38A, and distributes 13m in vertical direction and 16m in horizontal direction at a distance of 50 m with relatively good uniformity. In this way, light distributions are obtained in which light emitted from a replying unit can attain effectively at a center light emitting-receiving apparatus.

One narrow angle high sensitivity photodiode is used at the light receiving portion of the replying unit considering the size and cost limitation, although attaching two kind of light emitting elements is desirable similar to the case for the center light emitting-receiving apparatus assuming the cases for both the unit is placed near and apart from a center light emitting-receiving apparatus. The received infrared light signals from a distance are largely attenuated and after converting to electric signals show, although pulse shaped, weak signals with trails in front and behind influenced by an effect of the light-receiving element. So these signals is required to amplify analogously up to a level in which digital processing is available.

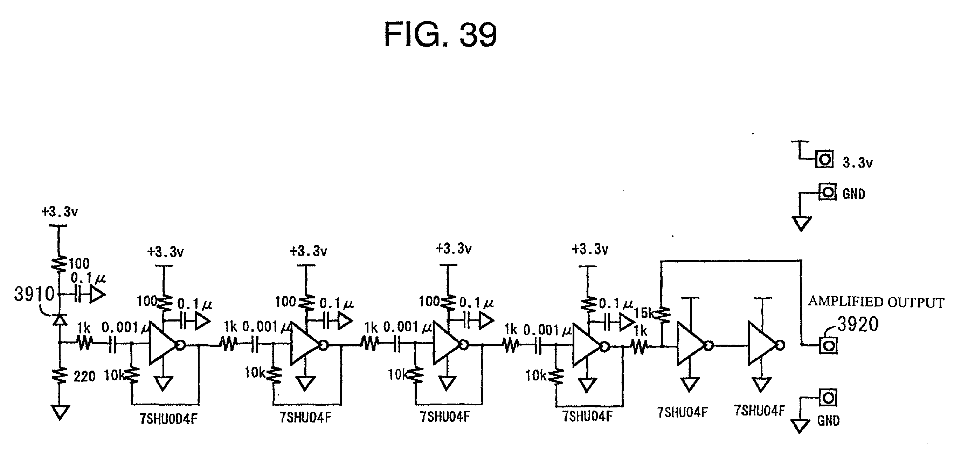

In this embodiment a novel amplification circuit shown in FIG. 39 is developed and used. In the figure, infrared signals are converted to electric signals by the photo-diode 3910, and amplified by this amplification circuit, and are outputted from the output terminal 3920 as the detected signals. The amplification circuit is a realized example constructed by using multiple cascade of the amplification circuit explained at FIG. 9A. Each amplification circuit composing each stage of the amplification circuit employs a digital element in which the output voltage show a transition when the input voltage increases above a definite value, and a feedback resistor is connected between the input terminal and the output terminal. The ratio of the output voltage to the input voltage, i.e. the amplification factor of each stage is controlled by choosing the ratio of the resistance value of the feedback resistor and input resistance of the digital element. The circuit realized high amplification factor of more than 80 db, which was difficult to obtain using usual analogue amplifier.

The digital logic element C-MOS and so on, which can be used in this embodiment, is usually manufactured and sold as 6 elements in a package. Since a circuit these elements connected in cascade within a package as they are, cannot be used because of occurring oscillation. For the replying units of this embodiment, single type digital logic elements are applied. On the other hand, we have found that the 6 gate 1 package digital logic element can be used with decreased noise and increased gain and advantageous at cost by connecting all gates in parallel.

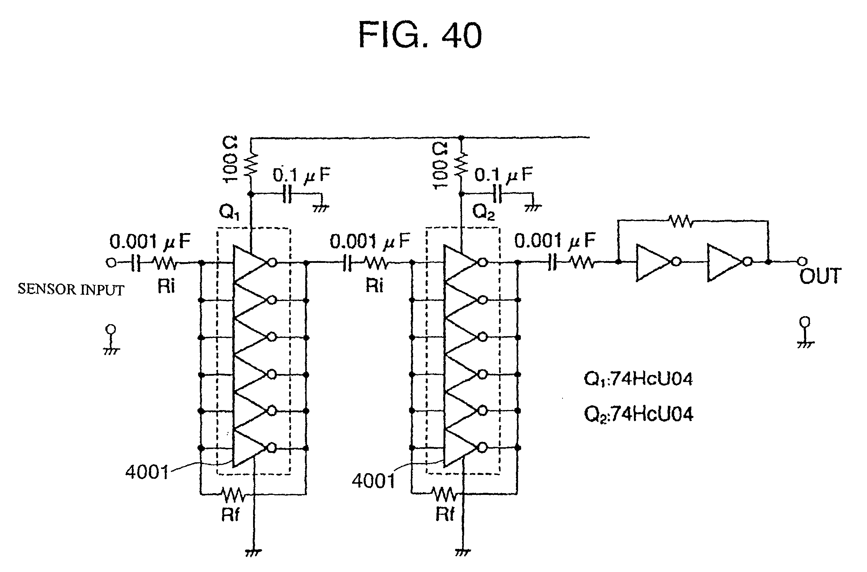

A circuit shown in FIG. 40 is an example. Connecting Rf and Ri, amplifier gain of 60 dB can be obtained connecting in cascade only by two stages. The results are due to the fact that internal resistance changes to 1/6 times, amplification ratio 6 times, and noise to square root of 1/6 times when all 6 elements in a package. This circuit elements employed are for general use and inexpensive. The circuit can be applied with small steps, but the power dissipation is large due to the parallel connection. In this embodiment the circuit was employed at the center apparatus.

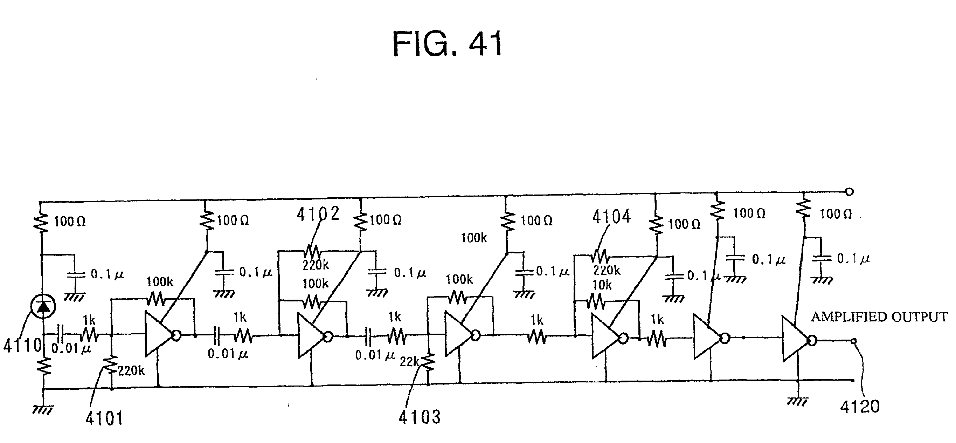

FIG. 41 is formed by altering the connection of resistors 4101-4104 in FIG. 39 for supplying input bias voltage of the 4-step amplification circuit with alternate connection as advancing every amplification step to the negative voltage side and to the positive voltage side. So the direction of bias is changing as going every amplification step. Such bias setting causes unidirectional amplification of input pulses obtained by converting infrared signals to electric signals, increased amplification factor toward the necessary direction, highly amplified signal output obtained from the terminal 4120, and suppression of ringing due to the excess input signals.

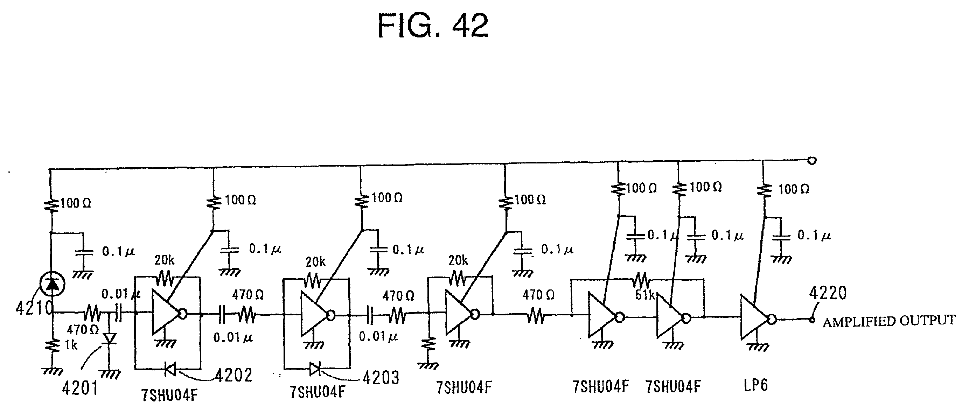

FIG. 42 shows a unidirectional amplifier similar to FIG. 40 but employing diodes. A diode 4201 is employed at the input of the amplifier, and further diodes 4202 and 4203 connecting input and output of the second and the third stage amplifying circuit are employed. The diode 4202 is connected such that the direction of the output to the input as forward, and diode 4203 is connected such that the input to the output as forward. Input pulses converted from infrared signals to electric signals by photo diode 4210 were amplified in one direction with increased amplification factor of amplification side. Furthermore, ringing could be suppressed.

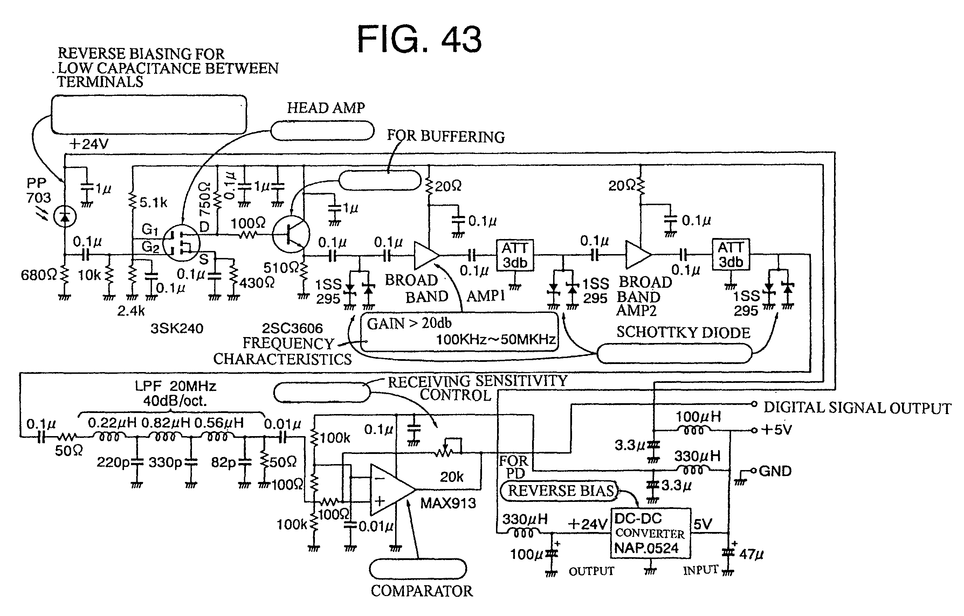

By the way, past analogue circuits employ amplification elements all for analogue circuits. An example is found in Transistor technology, CQ Publishing Co., Nov. 1996, page 314 about a signal amplification circuit for optical LAN system. The amplification circuit is shown in FIG. 43. In spite of the complicated circuit structure and accordingly expensive, the amplification circuit does not realize the high sensitivity of the embodiment of this invention described above.

The amplification circuit employed in this invention realized stable high amplification rate of 80 dB or more, without using 2 power supply, accessories for avoiding oscillation, or AGC circuit for avoiding saturation caused by strong signals from short distance. Especially, replying unit is required to be energy saving and compact, the amplifier of this construction has been found to be especially useful. Past analogue amplifiers saturate for excessively strong signal takes time for recovering to ordinary bias level, therefore, signal amplification is blocked. It has been found that the amplifier of this embodiment employing digital logic element has an advantage that the function of amplification does not suffer the effect of saturation.

Since the amplification factor of the amplifier circuit is given by the ratio Rf/Ri of the feedback resistance Rf and input resistance Ri, the circuit exceeding in overall in the circuit example of this invention FIG. 39, in which Rf with large values are employed for the first and the second step and Rf with small values are employed for the third the fourth step are employed.

A replying unit is realized which has small size, inexpensive and handy, 3.2v small single 10 hour continuously working for 10 hours dry-cell, and carrying signal emitter and receiver receiving signals from 50m apart and near by, as a result of a contrivance of light distribution effectively using the infrared light, employment of high stable high amplification factor amplifier using C-MOS digital elements, and adoption of method which utilizes replying signal windows.

Replying units are displaced both at places with extremely short distance of several meters on one hand and at place more than 50 m apart on the other hand from a center light emitting-receiving apparatus. So there occurs scattering in timing of signals caused by scattering of characteristics of light emitting-receiving elements employed for center light emitting-receiving apparatus, scattering of characteristics of light emitting-receiving elements for replying units, and scattering of pulse timing which occurs when shaping deformed by converting light signals from large distant places to electric signals, in addition to the scattering in timing of signals caused by differences of transmitting lengths between replying units and center light emitting-receiving apparatus. In the apparatus of this embodiment, the scattering could be absorbed combining the special high amplification rate and small data delay amplifier with large durability to saturation for strong signals does mot saturate, a plural of light emitting apparatus having mutual timing adjustment function, and an window controlling system.

By the way, although the amplifier described above is suitable as the amplifying circuit for amplifying electric signals detected from infrared lights, the amplification circuits which can be employed in this invention are not limited to this type, and furthermore the application of the amplifier described above is not limited to this apparatus.

At the communications using space transmission of infrared lights, obstacles of the lights interrupt the communication. It has been confirmed that communications using reflection of the lights by placing substance such as films reflecting infrared lights at a ceiling or walls of the room, considering such cases, in this invention. The apparatus describe in this embodiment can make communications with no problem since the apparatus described in this embodiment is designed considering distant infrared communications.

The embodiments described above are desirable practical examples and not all of them. This invention is described in the claims and all variations of the claims are included in this invention.

### Industrial Applicability

As described above in detail, setting and removing of the apparatus for totaling and analyzing replies are easy because the apparatus uses the apparatus uses space transmission of infrared lights and not wired system. The working time for setting and removing was largely shortened to about 1/10 of wired type system.

Since this system could be constructed by using relatively simple circuit structure, the cost of the replying units are about one order less compared with the ones used wireless systems, and number of the replying units could be increased such that large scale totaling and analyzing of replies at large place using 1000 replying units, for example.

The infrared light communications, not giving interference to other communication systems and electronic devices, can use without limitations for communications using radio frequency electromagnetic waves.

## Claims

1. An apparatus for totaling and analyzing replies, which comprises a center apparatus and a plurality of replying units carrying identification codes, the center apparatus comprising:
a primary controlling apparatus possessing input means for data and instructions input, ordering sending of command signals to the plurality of replying units, and totaling and analyzing the replying signals from the plurality of replying units responded to the command signals;
a center relaying and light signal emitting-receiving apparatus, outputting the command signals requesting reply according to the ordering of the primary controlling apparatus, converting to infrared light, and emitting, receiving light signals from the plurality of replying units responded to the command signals, detecting replying signals from the light signals identifying respective replying units according to the identification codes, and inputting the replying signals to the primary controlling apparatus;
the plurality of replying units, each comprising:
an reply inputting portion inputting an reply;
a light-receiving portion receiving light signals and detecting the command signals;
a control portion outputting a replying signal by a replying method pointed by the command signals to the replying unit; and
light signal emitting portion converting the replying signals to infrared light and emitting to the center relaying and light signal emitting-receiving apparatus.

2. The apparatus for totaling and analyzing replies as in claim 1, wherein the center relaying and light emitting-receiving apparatus comprises a center light emitting-receiving apparatus emitting the command for requesting reply converting to infrared light, and receiving and detecting the infrared light replying signals from the plurality of replying units, and relaying apparatus signal processing and relaying between the primary controlling apparatus and center light emitting-receiving apparatus.

3. The apparatus for totaling and analyzing replies as in claim 2, wherein the apparatus for totaling and analyzing replies comprises the center light emitting-receiving apparatus plurally and a transmitting time controlling device controlling each transmitting time between the center light emitting-receiving apparatus and the relaying apparatus to keep substantially equal.

4. The apparatus for totaling and analyzing replies as in claim 1, wherein the center apparatus comprises a display device displaying a question and a result of totaling and analyzing.

5. The apparatus for totaling and analyzing replies as in claim 1, wherein the command signal directing replies emitted by the center apparatus comprises a replying unit exciting signal, a frame-synchronizing signal, a mode command signal designating kind of response and a replying period designating signal designating replying period for each identifying code, and the replying units are g excited by the replying unit exciting signal, synchronize with the frame synchronizing signal, and reply at the replying period of each identifying code designated by the replying period designating signal following the mode command signal.

6. The apparatus for totaling and analyzing replies as in claim 5, wherein the center apparatus emits command signals of pulse array having substantially equal pulse width and being distinguished by pulse interval, and the replying unit respond distinguishing the kinds of signals by the interval of pulses.

7. The apparatus for totaling and analyzing replies as in claim 6, wherein the replying unit places replying signal windows in a period designated by the command directing replies according to the identification code and outputs replying signals in the replying signal windows, and the center light emitting-receiving apparatus of the center apparatus recognizes and distinguishes the signals at the replying signal windows in the period designated according to the identification code as the signals from the replying unit.

8. The apparatus for totaling and analyzing replies as in claim 7, wherein the replying signal windows are set at the later half of the replying period.

9. The apparatus for totaling and analyzing replies as in claim 1, wherein the replying unit stops the sending by a command to the replying units accompanying command for stop sending.

10. The apparatus for totaling and analyzing replies as in claim 1, wherein at least either one of the replying unit and the center apparatus comprises an amplifier possessing an amplification circuit employing an electronic device in which a transition of the output voltage occurs when an input voltage exceeds a fixed value, and a feedback resistors connecting between the input and the output of the electronic device, the amplifier having high sensitivity to a weak signal from a distant place and having limiting function for a large signal from short distance.

11. The apparatus for totaling and analyzing replies as in claim 10, wherein the amplifier comprises the amplification circuit connected in cascade.

12. The apparatus for totaling and analyzing replies as in claim 11, wherein the amplifier comprises an amplification stage in which the input bias voltage is set around the starting voltage and an amplification stage in which the input bias voltage is set around the finishing voltage are connected alternately, amplifying an input pulse in one direction.

13. The apparatus for totaling and analyzing replies as in claim 11, wherein the amplifier comprises a diode at input stage amplifying an input pulse in one direction.

14. The apparatus for totaling and analyzing replies as in claim 11, wherein input terminal and the output terminal are connected by a diode at each of the first stage amplification circuit and the second stage amplification circuit, and the diode in one stage is directed the direction of the input to the output as forward, and the diode in the other stage is directed the direction of the output to the input as forward, and amplifies an input pulse in one direction.

15. The apparatus for totaling and analyzing replies as in claim 10, wherein the amplifier comprises the amplification circuit plurally and connected in parallel increasing amplification stability.

16. The apparatus for totaling and analyzing replies as in claim 1, wherein the center light emitting-receiving apparatus comprises a light receiving portion having a combination of a plurality of light emitting elements with different directivity, receiving signals both signals from replying units distributed at short distances and wide angle and weak signals from replying units at long distances.

17. The apparatus for totaling and analyzing replies as in claim 1, wherein the replying unit comprises a light emitting portion a plurality of light emitting elements with angular distribution and a light distribution correcting plate correcting a distribution of lights from the plurality of light emitting elements, facilitating the sending of lights from the replying unit by emitting light through the light distribution correcting plate.

18. The apparatus for totaling and analyzing replies as in claim 1, wherein the center light emitting-receiving apparatus comprises a light emitting-receiving head carrying light emitting elements and light receiving elements on a concave surface.

19. The apparatus for totaling and analyzing replies as in claim 1, wherein the apparatus for totaling and analyzing replies comprises an infrared light reflecting substance, and the center apparatus and the replying unit communicate infrared light space transmitting communication through the reflecting substance.

20. The apparatus for totaling and analyzing replies as in claim 1, wherein apparatus for totaling and analyzing replies comprises a lighting substance showing an replier a target of light emitting.

21. A totaling and analyzing apparatus supervising system comprising:
a plurality of the totaling and analyzing apparatus having replying units emitting a replying signals replying to question by infrared lights and center apparatus detecting, totaling, and analyzing the replying signals,
connecting the plurality of the totaling and analyzing apparatus by a communication system, and totaling and analyzing by combining results of the plurality of the totaling and analyzing apparatus.

22. A method for totaling and analyzing a plurality of replies to a question using a plurality of replying units carried by a plurality of repliers and a center apparatus, comprising:
a step of replying units being inputted an reply by an replier replying to a question presenting by a questioner;
a step of the center apparatus being directed to practice totaling and analyzing;
a step of the center apparatus outputting a command for directing replies designating a replying period for each of identification codes of the replying units;
a step the center apparatus sending the command for directing replies by infrared light to the plurality replying units;
a step for the plurality replying units the receiving infrared light from the center apparatus;
a step of the replying units outputting replying signals by outputting replying pulses to replying period designated by identification code for each of the replying units;
a step of the replying units sending the replying signals by infrared light;
a step of the center apparatus receiving the infrared light replying signals of the replying units;
a step of the center apparatus signal processing and discriminating the replying signals for each replying period of the replying signals; and
a step of the center apparatus obtaining a totaling and analyzing result by totaling and analyzing replies from the signal processed replying signals.

23. An amplifier comprising an amplifying circuit, the amplifying circuit possessing:
an electronic device in which e a transition of the output voltage occurs when an input voltage exceeds a fixed value; and
a feedback resistor connecting between the input and the output of the electronic device, having high sensitivity to a weak signal from a distant place and having limiting function for a large signal from short distance.
